# EUROPÄISCHE PATENTSCHRIFT

(11) **EP 2 910 922 B1**
(45) Veröffentlichungstag und Bekanntmachung des Hinweises auf die Patenterteilung: **06.07.2016**
(21) Anmeldenummer: 15000191.5
(22) Anmeldetag: 23.01.2015
(51) Int. Cl.: G01N 3/06, G01N 3/18, G01N 3/32

(54) **Vorrichtung und Verfahren zur Messung einer Längenänderung einer Probe und/oder zur Messung einer Deformationskraft an einer Probe**
Device and method for measuring a length variation of a sample and/or measurement of a deformation force affecting a sample
Dispositif et procédé de mesure d'une modification de longueur d'un échantillon et/ou de mesure d'une force de déformation sur un échantillon

(30) Priorität: 19.02.2014 DE 102014102077
(43) Veröffentlichungstag der Anmeldung: 26.08.2015
(73) Patentinhaber: Netzsch Gerätebau GmbH, 95100 Selb (DE)
(72) Erfinder: Wolhlfahrt, Fabian, 95100 Selb (DE); Denner, Thomas, 95100 Selb (DE); Storch, Georg, 95100 Selb (DE)

(56) Entgegenhaltungen:
- DE-T2- 69 724 021
- JP-A- H01 274 033
- US-A1- 2003 188 585

## Beschreibung

Die vorliegende Erfindung betrifft eine Vorrichtung und ein Verfahren zur Messung einer Längenänderung einer Probe nach dem Oberbegriff des Anspruchs 1 bzw. 10, sowie eine Vorrichtung und ein Verfahren zur Messung einer Deformationskraft an einer Probe nach dem Oberbegriff des Anspruchs 2 bzw. 11, insbesondere zur Verwendung bei einer thermomechanischen Analyse, nachfolgend auch als "TMA" bezeichnet, bzw. zur Verwendung bei einer dynamisch-mechanischen Analyse, nachfolgend auch als "DMA" bezeichnet.

Die TMA bestimmt Dimensionsänderungen einer Probe (z. B. Feststoff, Flüssigkeit oder pastöses Material) als Funktion der Temperatur und/oder Zeit unter definierter mechanischer Belastung.

Die DMA bestimmt eine Deformationskraft an einer Probe als Funktion der Temperatur und/oder Zeit unter definierter dynamisch-mechanischer Deformation.

Die "Deformationskraft" und die "Deformation" können hierbei als solche, also als eine Kraft bzw. ein Weg (um den die Probe deformiert ist) verstanden, gemessen und verarbeitet werden. Im Zusammenhang mit einer üblichen DMA "im engeren Sinne", bei welcher nämlich die Probe einer sich zeitlich sinusförmig ändernden Deformation (Deformationsweg) unterworfen wird, können die "Deformationskraft" und die "Deformation" demgegenüber auch durch eine "Kraftamplitude" (der sinusförmig variierenden Deformationskraft) bzw. "Wegamplitude" (des sinusförmig variierenden Deformationsweges) charakterisiert werden.

TMA und DMA können z. B. wertvolle Informationen betreffend Eigenschaften, Zusammensetzung, Struktur, Herstellungsbedingungen und Einsatzmöglichkeiten von Werkstoffen liefern.

Als typisches Einsatzgebiet der TMA sei lediglich beispielhaft die Charakterisierung von Kunststoffen (z. B. Elastomere), Farben und Lacken, Verbundwerkstoffen, Klebstoffen, Folien, Fasern, Keramiken, Gläsern und Metallen genannt.

Die DMA kann z. B. eingesetzt werden, um viskoelastische Materialeigenschaften (Moduln, Verlustfaktor, Dämpfung etc.) oder Temperaturen, welche das elastische bzw. viskoelastische Verhalten eines Materials charakterisieren, zu bestimmen.

Abgesehen von der bereits erwähnten Anwendung für TMA und DMA kann die Erfindung darüber hinaus z. B. auch für so genannte Relaxationsmessungen eingesetzt werden, bei welchen eine Deformationskraft an der Probe als Funktion der Temperatur und/oder Zeit unter definierter, insbesondere z. B. konstanter mechanischer Deformationsbelastung gemessen und aufgezeichnet wird.

Wenngleich im Stand der Technik vielfältige Vorrichtungen und Verfahren der eingangs genannten Art bekannt sind, so besteht in der Praxis insbesondere zur Verwendung bei der TMA und/oder der DMA weiterhin ein Bedürfnis für Verbesserungen derartiger Vorrichtungen und Verfahren, etwa im Hinblick auf die Durchführung möglichst präziser Messungen mit einer einfachen und zuverlässigen Konstruktion.

Eine Vorrichtung und ein Verfahren zur Messung einer Längenänderung einer Probe nach dem Oberbegriff des Anspruchs 1 bzw. 10 ist aus der Veröffentlichung JP H01-274033 A bekannt. Bei diesem Stand der Technik erfolgt die Messung der auf die Probe ausgeübten Kraft mit einer hinsichtlich Aufbau und Funktionsweise nicht näher beschriebenen Kraftmesseinrichtung, die in den Verlauf eines Fühlstempels integriert ist.

Eine Vorrichtung und ein Verfahren zur Messung einer Deformationskraft an einer Probe nach dem Oberbegriff des Anspruchs 2 bzw. 11 ist aus der Veröffentlichung US 2003/0188585 A1 bekannt. Bei diesem Stand der Technik erfolgt die Messung der Deformationskraft mit einer Kraftmesseinrichtung, deren Funktionsweise z. B. auf dem piezoelektrischen Effekt beruht und welche auf der dem Fühlstempel zur Aufprägung einer Deformation entgegengesetzten Seite der Probe angeordnet ist. Bei dieser Anordnung kommt es nachteiligerweise insofern zu einer gewissen Verfälschung der ebenfalls gemessenen Deformation der Probe, als letzlich hierbei auch eine gewisse Deformation der Kraftmesseinrichtung selbst "miterfasst" wird.

Eine weitere Vorrichtung zur Messung einer Längenänderung an einer Probe ist aus der Veröffentlichung DE 69724021 T2 bekannt. Bei diesem Stand der Technik wird eine Größe der Antriebskraft auf einen Führungsschlitten bestimmt, während eine durch eine mit dem Schlitten verbundene Proben-Spannvorichtung hervorgerufene Verformung der Probe gemessen wird.

Es ist eine Aufgabe der vorliegenden Erfindung, bei einer Vorrichtung bzw. einem Verfahren der eingangs genannten Art eine alternative Kraftmessung bereitzustellen, so dass insbesondere in einfacher, zuverlässiger und präziser Weise die Längenänderung einer Probe bei gleichzeitig gut definiert vorgebbarer Kraftbelastung und/oder die Deformationskraft an der Probe bei gleichzeitig gut definiert vorgebbarer Deformation gemessen werden kann.

Gemäß eines ersten Aspekts der Erfindung wird diese Aufgabe gelöst durch eine Vorrichtung zur Messung einer Längenänderung nach Anspruch 1.

Diese insbesondere in einem TMA-Gerät einsetzbare Vorrichtung kann vorteilhaft relativ einfach aufgebaut werden, wobei ferner eine hohe Präzision sowohl hinsichtlich der vorbestimmten Kraftbelastung als auch der gemessenen Längenänderung erzielbar ist.

Zum Begriff der "vorbestimmten Kraftbelastung" ist anzumerken, dass es sich hierbei prinzipiell sowohl um eine Zugkraftbelastung als auch eine Druckkraftbelastung handeln kann, die mittels des Fühlstempels auf die betreffende Probe ausgeübt wird.

Im einfachsten Fall handelt es sich um eine konstante Kraft, die beispielsweise im Rahmen einer TMA über den gesamten durchlaufenen Temperaturbereich bzw. über die gesamte Dauer der TMA konstant gehalten wird. Abweichend davon kann die Kraftbelastung jedoch auch eine zeitlich variierende Kraft darstellen.

Schließlich ist anzumerken, dass die gemäß der vorbestimmten Kraftbelastung auf die Probe ausgeübte Kraft prinzipiell (innerhalb des technisch Machbaren) beliebig klein sein kann. Insofern kann die Vorrichtung nicht nur besonders vorteilhaft für die TMA "im engeren Sinne" eingesetzt werden, bei welcher nämlich eine "nennenswert große" Kraftbelastung erfolgt (z. B. mit betriebsmäßigem Erreichen von Werten von mehr als 0,5 N, insbesondere mehr als 1 N, beispielsweise etwa 3-5 N) sondern auch für die so genannte "Dilatometrie", bei welcher im engeren Sinne die Längenänderung einer Probe unter vernachlässigbarer Kraftbelastung ermittelt wird (z. B. Kraft von maximal 0,5 N).

Der hier verwendete Begriff der thermomechanischen Anlayse bzw. TMA kann insofern allgemein verstanden die Dilatometrie als einen Spezialfall mitumfassen.

Außerdem soll nicht ausgeschlossen sein, dass bei der Messung außer der Länge bzw. Längenänderung der betreffenden Probe eine oder mehrere weitere physikalische Eigenschaften an der Probe erfasst und bevorzugt zusammen mit der Probenlänge bzw. Probenlängenänderung in Abhängigkeit von der Zeit aufgezeichnet werden.

In einer Ausführungsform wird die vom Fühlstempel auf die Probe ausgeübte Kraft mit einer Auflösung von maximal 10 mN, insbesondere maximal 1 mN erfasst.

In einer insbesondere für die Dilatometrie (im engeren Sinne) geeigneten Ausführungsform ist die betriebsmäßig einstellbare bzw. bei der Messung eingestellte Kraft größer als 50 mN, insbesondere größer 100 mN, jedoch andererseits kleiner als 1 N, insbesondere maximal 0,5 N.

In einer insbesondere für die TMA (im engeren Sinne) geeigneten Ausführungsform ist die betriebsmäßig einstellbare bzw. bei der Messung eingestellte Kraft größer als 5 mN, insbesondere größer 10 mN, jedoch andererseits kleiner als 10 N, insbesondere maximal 5 N.

In einer Ausführungsform ist die Steuereinrichtung dazu ausgebildet, gemäß eines Betriebsmodus eine über die gesamte Messung konstante Kraftbelastung der Probe vorzusehen.

In einer Ausführungsform ist die Steuereinrichtung dazu ausgebildet, gemäß eines (ggf. anderen) Betriebsmodus eine über die Messung variable Kraftbelastung der Probe vorzusehen. Letzteres kann z. B. sehr vorteilhaft zur Messung der Längenänderung einer "moduliert kraftbelasteten" Probe im Rahmen einer "kraftmodulierten TMA" vorteilhaft sein, weil damit die Probe noch detaillierter charakterisiert werden kann.

Bei einer Verwendung im Rahmen einer TMA kann z. B. vorgesehen sein, dass gemäß eines Betriebsmodus eine zeitlich periodische Kraft (z. B. mit rampenförmigem, sinusförmigem, dreieckförmigem oder rechteckförmigem bzw. gepulstem Verlauf) vorgegeben wird, wobei die Periode einer derartigen Kraftmodulation insbesondere z. B. wesentlich kleiner als die TMA-Messdauer sein kann (innerhalb derer die Probe ein z. B. benutzerseitig vorgegebenes "Temperaturprogramm" durchläuft).

In einer für eine "(periodisch) kraftmodulierte TMA" vorgesehenen Ausführungsform liegt die Kraftmodulationsfrequenz in einem Bereich von 0,0001 Hz bis 4 Hz, insbesondere 0,0002 Hz bis 2 Hz.

In einer Ausführungsform liegt die Messdauer der TMA in einem Bereich von 15 min bis 40 h, insbesondere 30 min bis 30 h.

Gemäß eines zweiten Aspekts der Erfindung wird die eingangs gestellte Aufgabe gelöst durch eine Vorrichtung zur Messung einer Deformationskraft nach Anspruch 10.

Diese insbesondere in einem DMA-Gerät oder einem Gerät zur Durchführung von Relaxationsmessungen einsetzbare Vorrichtung unterscheidet sich von der oben bereits erläuterten, für TMA bzw. Dilatometrie einsetzbaren Vorrichtung durch die "Steuereinrichtung" bzw. die Art und Weise der Verarbeitung von "Sensorsignalen" (der Kraftmesseinrichtung und des Wegaufnehmers) zur Erzeugung des "Aktorsignals" (für die Antriebseinrichtung).

Vor diesem Hintergrund ist es sogar denkbar, mittels der Erfindung eine Vorrichtung mit sämtlichen Merkmalen der Vorrichtung gemäß des ersten Erfindungsaspektes und sämtlichen Merkmalen der Vorrichtung gemäß des zweiten Erfindungsaspektes bereitzustellen, um z. B. eine sowohl für TMA bzw. Dilatometrie als auch für DMA einsetzbare Vorrichtung zu erhalten. Hierfür muss lediglich die Steuereinrichtung dazu ausgebildet sein, die Antriebseinrichtung in einem "ersten Betriebsmodus" abhängig von der mittels der Kraftmesseinrichtung erfassten Kraft gemäß der vorbestimmten Kraftbelastung anzusteuern, und in einem "zweiten Betriebsmodus" abhängig von der mittels des Wegaufnehmers erfassten Bewegung gemäß der vorbestimmten Deformation anzusteuern.

Da jedoch in der Praxis wichtige Betriebsparameter wie das Ausmaß der auf die Probe auszuübenden Kraft- bzw. Deformationsbelastung und eine etwaige Modulationsfrequenz der Kraft- bzw- Deformationsbelastung für TMA und Dilatometrie einerseits und DMA andererseits zumeist verschieden gewählt werden, ist in der Regel die Schaffung eines für TMA optimierten oder für DMA optimierten Gerätes bevorzugt.

Bei der Vorrichtung gemäß des zweiten Erfindungsaspektes ist gemäß einer Ausführungsform die "Deformation" die Amplitude eines sich zeitlich sinusförmig ändernden, mittels des Fühlstempels bewirkten Deformationsweges (mitsamt Frequenz dieser Deformationsänderung), und die "Deformationskraft" die Amplitude einer sich entsprechend zeitlich sinusförmig ändernden, über den Fühlstempel übertragenen Deformationskraft (bevorzugt mitsamt Phasenverschiebung in Bezug auf die Deformation).

In einem einfachen Fall handelt es sich bei der vorbestimmten Deformation um einen sinusförmig variierenden Deformationsweg mit einer Frequenz und einer Amplitude, die beispielsweise im Rahmen einer DMA über den gesamten durchlaufenen Temperaturbereich bzw. über die gesamte Dauer der DMA konstant gehalten werden.

Dementsprechend ist in einer Ausführungsform die Steuereinrichtung dazu ausgebildet, gemäß eines Betriebsmodus eine über die gesamte Messung konstante Deformation der Probe vorzusehen. Insbesondere im Rahmen einer DMA-Messung kann "konstante Deformation" hierbei eine konstante Amplitude eines periodisch (z. B. sinusförmig) sich ändernden Deformationsweges bedeuten. Denkbar ist jedoch auch eine "konstante Deformation" im Sinne eines konstanten Deformationsweges, wie z. B. bei einer Relaxationsmessung, bei welcher die Deformationskraft an der Probe als Funktion der Temperatur und/oder Zeit unter definierter konstanter mechanischer Deformationsbelastung gemessen und aufgezeichnet wird.

Abweichend davon kann die vorbestimmte Deformation jedoch auch mit zeitlich variierender Wegfrequenz und/oder zeitlich variierender Wegamplitude vorgesehen sein.

Dementsprechend ist in einer Ausführungsform die Steuereinrichtung dazu ausgebildet, gemäß eines (ggf. anderen) Betriebsmodus eine über die gesamte Messung variable Deformation der Probe vorzusehen. Insbesondere im Rahmen einer DMA-Messung kann "variable Deformation" hierbei eine variable Amplitude eines periodisch (z. B. sinusförmig) sich ändernden Deformationsweges bedeuten. Denkbar ist jedoch auch eine "variable Deformation" im Sinne eines variablen Deformationsweges, wie z.B. bei einer Relaxationsmessung, bei welcher die Deformationskraft an der Probe als Funktion der Temperatur und/oder Zeit unter definierter variabler mechanischer Deformationsbelastung gemessen und aufgezeichnet wird.

Wie bei der TMA, so soll auch bei einer DMA (oder z. B. einer Relaxationsmessung) im Rahmen der Erfindung nicht ausgeschlossen sein, dass bei der Messung außer der Deformationskraft an der betreffenden Probe eine oder mehrere weitere physikalische Eigenschaften an der Probe erfasst und bevorzugt zusammen mit der Deformationskraft in Abhängigkeit von der Zeit aufgezeichnet werden.

In einer insbesondere für die DMA geeigneten Ausführungsform ist eine betriebsmäßig einstellbare bzw. bei der Messung eingestellte Deformationswegamplitude (für periodisch, insbesondere z. B. sinusförmig variierenden Deformationsweg) größer als 10 nm, insbesondere größer als 100 nm, jedoch andererseits kleiner als 5 mm, insbesondere maximal 0,5 mm.

In einer Ausführungsform wird die von der Kraftmesseinrichtung erfasste Kraft mit einer Auflösung von maximal 2 mN, insbesondere maximal 1 mN verarbeitet.

In einer Ausführungsform ist die Steuereinrichtung dazu ausgebildet, gemäß eines DMA-Betriebsmodus einen sinusförmig variierenden Deformationsweg mit über die gesamte Messung konstanter Deformationswegfrequenz vorzusehen.

In einer Ausführungsform ist die Steuereinrichtung dazu ausgebildet, gemäß eines (ggf. anderen) DMA-Betriebsmodus einen sinusförmig variierenden Deformationsweg mit über die Messung variierender Deformationswegfrequenz vorzusehen.

Die Deformationswegfrequenz kann z. B. in einem Bereich von 0,005 Hz bis 1000 Hz, insbesondere 0,01 Hz bis 100 Hz liegen.

In einer Ausführungsform liegt die Messdauer der DMA in einem Bereich von 10 min bis 15 h, insbesondere 30 min bis 4 h.

Im Rahmen der Erfindung dient die Führungseinrichtung dazu, eine Lagerung für die Fühlstempelbasis (an welcher der Fühlstempel befestigbar bzw. befestigt ist) derart bereitzustellen, dass die Fühlstempelbasis in Längsrichtung relativ zur stationären Basis bewegbar ist. Durch diese Bewegung wird die vorbestimmte Kraft auf die Probe ausgeübt bzw. die vorbestimmte Deformation der Probe bewirkt.

Für die konstruktive Ausgestaltung der Führungseinrichtung gibt es verschiedene Möglichkeiten. Besonders bevorzugt funktioniert die Führungseinrichtung nach einem Prinzip, wie es aus dem Stand der Technik von so genannten "Linearführungen" bekannt ist.

Insbesondere kann die Führungseinrichtung hierfür wenigstens eine in Längsrichtung geradlinig sich erstreckende und an der Basis ausgebildete oder fest mit der Basis verbundene, z. B. verschraubte "Führungsschiene" (insbesondere Führungsprofil) umfassen, an welcher ein "geführtes Teil", üblicherweise als "Schlitten" bezeichnet, geführt ist.

Diese Führung in Längsrichtung kann z. B. in an sich bekannter Weise eine Gleitreibung zwischen dem Schlitten und der Führungsschiene involvieren (miteinander korrespondierenden Profilkonturen von Schlitten und Führungsschiene). Alternativ oder zusätzlich können zwischen Führungsschiene und Schlitten wirkende Wälzlager (z. B. Kugellager oder Nadellager etc.) eingesetzt werden.

Der besondere Vorteil der Ausgestaltung der Führungseinrichtung gemäß dieses "Linearführungs-"Prinzips, also z. B. als eine Anordnung einer oder mehrerer (parallel verlaufender) Linearführungseinrichtungen an sich bekannter Art im Rahmen der Erfindung besteht darin, dass dieses Prinzip hinsichtlich der Länge, über welche die Führungseinrichtung die Fühlstempelbasis relativ zur stationären Basis bewegbar lagert, nachfolgend auch als "Führungshub" bezeichnet, nicht prinzipiell begrenzt ist und insofern vorteilhaft besonders lange Verfahrwege ermöglicht.

Ein weiterer Vorteil dieses Prinzips besteht darin, dass bei der Führungsbewegung auf Grund des Führungsprinzips nicht zwingend eine "Querbewegung" (quer zur Längsrichtung) hervorgerufen wird.

Der wie erwähnt hierbei relativ groß vorsehbare Führungshub (z. B. mehrere cm) kann vorteilhaft z. B. dazu genutzt werden, nicht nur die in der Praxis eher relativ kleine Längenänderung der betreffenden Probe zu messen, sondern auch eine demgegenüber relativ große Probenlänge (z. B. vor Beginn der eigentlichen Messung, d.h. z. B. der Messung einer Probenlängenveränderung).

Bei der Erfindung ist vorgesehen, dass die Fühlstempelbasis einen von der Führungseinrichtung unmittelbar geführten Schlitten und eine unmittelbar mit dem Fühlstempel verbindbare oder verbundene Fühlstempelaufnahme aufweist, wobei der Schlitten und die Fühlstempelaufnahme über einen elastisch deformierbaren Körper miteinander verbunden sind.

Ein Vorteil dieser erfindungsgemäßen Maßnahme besteht darin, dass eine bei der Messung vorzubestimmende Kraft bzw. vorzubestimmende Deformation "feiner dosiert" werden kann als bei einer starren Verbindung zwischen Schlitten und Fühlstempelaufnahme. Je elastischer der deformierbare Körper ist, desto größer ist z. B. bei einer TMA der zur Erzielung einer bestimmten Kraft bzw. Kraftänderung erforderliche Verfahrweg des Schlittens.

Des Weiteren ist bei der Erfindung vorgesehen, dass die Kraftmesseinrichtung als Verformungsmesseinrichtung zur Messung der Verformung des elastischen Körpers ausgebildet ist.

Damit hat der elastische Körper insbesondere z. B. bei der TMA vorteilhaft eine Doppelfunktion, nämlich einerseits zur Schaffung bzw. Beeinflussung einer Umsetzungscharakteristik für die Umsetzung der Schlittenbewegung in eine auf die Probe ausgeübte Kraft, und andererseits als Funktionskomponente für die Kraftmessung.

Hinsichtlich der konkreten Gestaltung eines solchen, auch zur Kraftmessung genutzten elastischen Körpers kann vorteilhaft auf entsprechende Konstruktionen aus dem Stand der Technik zurückgegriffen werden. Derartige Komponenten, d.h. elastische Körper mit jeweils darin oder daran integriertem Kraftmesssensor, sind z. B. als "Wägezellen", insbesondere so genannte Plattformwägezellen, bekannt und kommerziell erhältlich. Derartige, an sich bekannte Kraftsensoren können bei der Erfindung vorteilhaft eingesetzt werden.

Der elastische Körper kann z. B. aus einem Kunststoffwerkstoff oder aus einem metallischen Werkstoff gebildet sein, z. B. in Form eines Biegestreifens, einer Biegestrebenanordnung oder auch in "massiverer" Form wie z. B. in Form eines Quaders, bei dem sämtliche Kantenlängen eine Länge besitzen, die sich nicht wesentlich (z. B. um weniger als einen Faktor 3) von der mittleren Kantenlänge unterscheiden (wie z. B. bei den unten mit Bezug auf die Zeichnungen noch beschriebenen Ausführungsbeispielen).

Bei Verwendung einer quaderförmigen Formgestaltung des elastischen Körpers, insbesondere wenn dieser aus einem metallischen Material gebildet ist, kann es von Vorteil sein, das Material z. B. in einem zentralen Bereich auszusparen, um eine entsprechende Schwächung und demzufolge größere Elastizität im Vergleich zu einem Vollmaterial zu erzielen.

In einer Weiterbildung ist vorgesehen, dass zwischen Schlitten und Fühlstempelaufnahme ein mechanischer Anschlag ausgebildet ist, derart, dass eine Relativbewegung zwischen Schlitten und Fühlstempelaufnahme und somit die Verformung des elastischen Körpers begrenzt ist. Damit kann vorteilhaft eine mechanische Überlastung des elastischen Körpers bzw. der Wägezelle vermieden werden.

In einer konstruktiv einfachen Ausführungsform ist zur Realisierung des mechanischen Anschlages vorgesehen, dass der Schlitten mit einer davon abstehenden Anschlagnase ausgebildet oder versehen ist, welche an ihrem distalen Ende bei entsprechender (maximal zulässiger) Verformung an einer Anschlagfläche der Fühlstempelaufnahme zur Anlage kommt. Zu diesem Zweck kann das distale Ende der Anschlagnase z. B. in eine entsprechend dimensionierte Einbuchtung der Fühlstempelaufnahme eingreifen. Auch die umgekehrte Anordnung ist möglich, bei welcher eine Anschlagnase von der Fühlstempelaufnahme absteht und mit einem distalen Ende bei entsprechender Verformung mit einer Anschlagfläche in Kontakt kommt, welche am Schlitten (z. B. in einer entsprechenden Einbuchtung) vorgesehen ist.

In einer insbesondere für den Einsatz bei einer TMA vorteilhaften Ausführungsform ist vorgesehen, dass die Antriebseinrichtung einen Schrittmotor, insbesondere z. B. einen Piezoschrittmotor, zur schrittweisen Verstellbarkeit der Fühlstempelbasis relativ zur stationären Basis aufweist.

Ein Schrittmotor bietet z. B. den Vorteil, dass die Ansteuerung im Rahmen einer Softwaresteuerung der Vorrichtung in einfacher und präziser Weise erfolgen kann.

In einer insbesondere für den Einsatz bei einer DMA vorteilhaften Ausführungsform ist vorgesehen, dass die Antriebseinrichtung einen schwingungsfähigen Motor bzw. Aktuator, insbesondere z. B. eine Tauchspulenanordnung zur Erzeugung einer schwingenden, insbesondere sich zeitlich sinusförmig ändernden Bewegung der Fühlstempelbasis relativ zur stationären Basis aufweist. In einem "DMA-Betrieb" der Vorrichtung kann mittels der Steuereinrichtung dann eine vorbestimmte Deformationswegamplitude und -frequenz des Motorbetriebes angesteuert werden.

In einer bevorzugten Ausführungsform ist die Steuereinrichtung als programmgesteuerte Steuereinrichtung ausgebildet, durch welche im Betrieb der Vorrichtung ein zur Ansteuerung der Antriebseinrichtung (z. B. Schrittmotor, Tauchspule etc.) dienendes Steuersignal erzeugt wird.

Im Falle einer TMA wird dieser Steuereinrichtung hierbei während der Messung eine Information (z. B. digitales Signal) eingegeben, die repräsentativ für die von der Kraftmesseinrichtung erfassten Kraft ist, um auf dieser Basis das Steuersignal für die Antriebseinrichtung zu erzeugen.

Im Falle einer DMA wird der Steuereinrichtung während der Messung eine Information (z. B. digitales Signal) eingegeben, die repräsentativ für die mittels des Wegaufnahmers bestimmte Bewegung (z.B. Deformationsweg; oder bei oszillierender Bewegung: Deformationswegamplitude und -frequenz) ist, um auf dieser Basis das Steuersignal für die Antriebseinrichtung zu erzeugen.

Kommerzielle Wägezellen, die z. B. mit einem am elastischen Körper aufgebrachten Dehnungsmessstreifen versehen sind, können z. B. ein analoges Kraftmesssignal liefern, welches sodann mittels eines Analog/Digital-Wandlers umgesetzt der Steuereinrichtung zugeführt werden kann. Im Falle des "DMA-Betriebes" kann z. B. vor oder nach einer solchen Analog/Digital-Wandlung eine Verarbeitung des Signals zur Ermittlung von Amplitude und Frequenz bzw. Phasenverschiebung vorgesehen werden.

Mit einem in der Steuereinrichtung ablaufenden Steuerprogramm kann sodann die bei der Erfindung erforderliche Ansteuerung der Antriebseinrichtung, im "TMA-Betrieb" abhängig von der mittels der Kraftmesseinrichtung erfassten Kraft gemäß der vorbestimmten Kraftbelastung, bzw. im "DMA-Betrieb" abhängig von der mittels des Wegaufnehmers erfassten Deformation gemäß der vorbestimmten Deformation realisiert werden.

Auch im Zusammenhang mit der Vorgabe der Kraft- bzw. Deformationsbelastung, also bei der TMA beispielsweise eines zeitabhängig-variablen (alternativ: konstanten) Kraftverlaufes kann hierbei sehr vorteilhaft die programmgesteuerte Steuereinrichtung genutzt werden.

Bevorzugt ist die Steuereinrichtung bzw. das darauf ablaufende Steuerprogramm so ausgebildet, dass ein Benutzer über eine geeignete Mensch-Maschine-Schnittstelle (z. B. Tastatur, Monitor etc.) eine gewünschte Kraft- bzw. Deformationsbelastung vorgeben kann. Diese Vorgabe wird sodann bei der Messung von der Steuereinrichtung verwendet, um die Antriebseinrichtung abhängig von der mittels der Kraftmesseinrichtung erfassten Kraft bzw. der vom Wegaufnehmer erfassten Deformation gemäß der vorbestimmten Kraft- bzw. Deformationsbelastung anzusteuern.

Die in einem "TMA-Betrieb" vorgesehene Ansteuerung der Antriebseinrichtung "abhängig von der mittels der Kraftmesseinrichtung erfassten Kraft gemäß der vorbestimmten Kraftbelastung" kann auch als eine Regelung bezeichnet werden, mittels welcher die tatsächlich auf die Probe ausgeübte und mittels der Kraftmesseinrichtung erfasste Kraft ("Ist-Wert") unter Verwendung der Antriebseinrichtung so eingestellt wird, dass diese der vorgegebenen Kraftbelastung, also der vorgegebenen zeitlich konstanten oder variierenden Kraft ("Soll-Wert") entspricht.

Analoges gilt für den "DMA-Betrieb", in welchem die tatsächliche Deformation der Probe (gemessen mit Hilfe des Wegaufnehmers), also ein "Ist-Wert", unter Verwendung der Antriebseinrichtung so eingestellt wird, dass diese der vorgegebenen Deformation ("Soll-Wert") entspricht, z. B. einem zeitlich mit bestimmter Amplitude und bestimmter Frequenz variierenden Deformationsweg.

Die Details einer solchen Regelung bzw. eine konkrete Regelcharakteristik (z. B. P-, PI, PID-Regelung etc.) können vorteilhaft durch das vorerwähnte Steuerprogramm vorgegeben und gegebenenfalls vom Benutzer beeinflussbar sein.

In einer Ausführungsform ist der Wegaufnehmer, mittels welchem die Bewegung des Fühlstempels in Längsrichtung relativ zur Basis gemessen wird, durch ein optisches Wegmesssystem gebildet. Bevorzugt handelt es sich dabei um ein berührungslos arbeitendes optisches Wegmesssystem, so dass vorteilhaft keine das Messergebnis verfälschende Kraft durch die Wegmessung auf den Fühlstempel bzw. eine mit dem Fühlstempel verbundene Vorrichtungskomponente ausgeübt wird.

In einer Weiterbildung ist vorgesehen, dass das optische Wegmesssystem einen Linearmaßstab und einen Sensor mit angeschlossener Linearencoderelektronik umfasst, wobei der Linearmaßstab am Fühlstempel oder einem damit in Längsrichtung schubfest verbundenen Teil angeordnet ist, und der Sensor stationär angeordnet ist, oder umgekehrt.

Bei dem in Längsrichtung schubfest mit dem Fühlstempel verbundenen Teil kann es sich insbesondere um die oben bereits erwähnte Fühlstempelaufnahme handeln, welche, über den vorgenannten elastischen Körper, mit einem Schlitten einer als "Linearführung" ausgebildeten Führungseinrichtung verbunden sein kann.

Die Messung der Fühlstempelbewegung mittels des Wegaufnehmers ist bevorzugt mit einer Auflösung von maximal 10 nm, weiter bevorzugt maximal 1 nm, oder sogar maximal 0,1 nm vorgesehen.

Bei der Erfindung kann eine derartige Wegauflösung vorteilhaft über den gesamten Messbereich des Wegaufnehmers (z. B. mindestens 5 mm, insbesondere mindestens 10 mm) erzielt werden (z. B. unter Einsatz eines Wegaufnehmers umfassend einen Linearmaßstab und einen Sensor, z. B. wie oben beschrieben).

In einer Weiterbildung der erfindungsgemäßen Vorrichtung ist vorgesehen, dass diese ferner einen ansteuerbar temperierbaren Probenraum mit einem darin zur Lagerung der Probe vorgesehenen Probenhalter aufweist und die Steuereinrichtung ferner dazu ausgebildet ist, bei der Messung eine vorbestimmte zeitabhängige Temperierung des Probenraumes anzusteuern. Die Vorrichtung ist gemäß dieser Weiterbildung somit zu einer Vorrichtung zur Durchführung einer thermomechanischen Analyse (TMA) bzw. dynamisch-mechanischen Analys (DMA) erweitert.

Die hierfür erforderliche zeitabhängige Temperierung des Probenraumes kann vorteilhaft ebenfalls durch die bereits erwähnte Steuereinrichtung angesteuert werden.

Im Fall der Realisierung eines TMA-Gerätes kann das in der Steuereinrichtung ablaufende Steuerprogramm als Eingaben insbesondere folgendes erhalten:
- vorab: Benutzereingabe(n) zur Definition eines "TMA-Messprogrammes", z. B. zeitlicher Verlauf der Temperierungstemperatur und der Kraftbelastung,
- während der Messung: ein für die mittels der Kraftmesseinrichtung erfasste Kraft repräsentatives Signal,
- während der Messung: ein für die mittels des Wegaufnehmers erfasste Längenänderung der Probe repräsentatives Signal, und
- während der Messung: ein für eine im Probenraum und/oder unmittelbar an der Probe erfasste Temperatur repräsentatives Signal (z. B. zur Bewerkstelligung einer Temperaturregelung, wie sie für TMA-Geräte bekannt ist).

Als Ausgaben kann das Steuerprogramm während der Messung liefern:
- ein Steuersignal zur Steuerung der Temperierung des Probenraumes (z. B. durch eine elektrische Heizeinrichtung), und
- ein Steuersignal zur Ansteuerung der Antriebseinrichtung.

Während der TMA-Messung wird zeitaufgelöst die Probentemperatur und die mittels des Wegaufnehmers erfasste Längenänderung der Probe aufgezeichnet.

Abweichend davon, im Fall der Realisierung eines DMA-Gerätes würde das in der Steuereinrichtung ablaufende Steuerprogramm vorab eine oder mehrere Benutzereingaben zur Definition eines "DMA-Messprogrammes", z. B. zeitlicher Verlauf der Temperierungstemperatur und der gewünschten Deformation erhalten, und eine Ansteuerung der Antriebseinrichtung gemäß "DMA-Betrieb" (und nicht "TMA-Betrieb") vornehmen. Während der DMA-Messung wird zeitaufgelöst die Probentemperatur und die mittels der Kraftmesseinrichtung erfasste Deformationskraft der Probe aufgezeichnet (wobei "Deformationskraft" wie bereits erläutert bevorzugt eine Deformationskraftamplitude und eine Deformationskraftphasenverschiebung bedeutet).

Gemäß eines weiteren Aspekts der vorliegenden Erfindung wird ein z. B. für die TMA einsetzbares Verfahren zur Messung einer Längenänderung einer Probe nach Anspruch 10 vorgeschlagen.

Gemäß eines noch weiteren Aspekts der vorliegenden Erfindung wird ein z. B. für die DMA einsetzbares Verfahren zur Messung einer Deformationskraft an einer Probe nach Anspruch 11 vorgeschlagen.

Die oben bereits mit Bezug auf die zwei Ausführungsvarianten der erfindungsgemäßen Vorrichtung beschriebenen Besonderheiten bzw. Ausführungsformen und Weiterbildungen können in analoger Weise, einzeln oder in beliebiger Kombination, auch für diese zwei Ausführungsvarianten (für "TMA-Betrieb" bzw. für "DMA-Betrieb") des erfindungsgemäßen Verfahrens vorgesehen werden.

Gemäß eines noch weiteren Aspekts der vorliegenden Erfindung wird die Verwendung einer Vorrichtung und/oder eines Verfahren der beschriebenen Art zur Messung einer Längenänderung einer Probe im Rahmen eines TMA-Gerätes bzw. eines TMA-Verfahrens vorgeschlagen.

Gemäß eines noch weiteren Aspekts der vorliegenden Erfindung wird die Verwendung einer Vorrichtung und/oder eines Verfahren der beschriebenen Art zur Messung einer Deformationskraft an einer Probe im Rahmen eines DMA-Gerätes bzw. eines DMA-Verfahrens vorgeschlagen.

Bei diesen Verwendungen bzw. den erfindungsgemäßen Messverfahren ist gemäß einer Weiterbildung vorgesehen, dass mittels des Wegaufnehmers, vor der Messung der Längenänderung der Probe bzw. Deformationskraft an der Probe, auch die Länge der Probe gemessen werden kann. Hierfür kann bei der Erfindung folgender Ablauf vorgesehen sein:

Zunächst (ohne in der Vorrichtung angeordnete Probe) steuert die Steuereinrichtung (auf entsprechende Benutzereingabe hin) ein Verfahren des Fühlstempels in Richtung einer Probenaufnahme (z. B. Probenhalter bzw. stationäre Probenanschlagfläche) an, bis das Ende des Fühlstempels gegen eine stationäre Fläche (Anschlagfläche) stößt, an welcher später die Probe anliegt. Das Anstoßen kann hierbei in einfacher Weise durch Auswertung der gemessenen Kraft (abrupter Anstieg) und/oder des Wegaufnehmersignals (weitere Wegänderung bleibt aus) erfasst werden.

Sodann steuert die Steuereinrichtung ein Zurückfahren des Fühlstempels an, so dass im Bereich der Probenaufnahme Platz zum Einsetzen der Probe geschaffen wird, wobei während dieses Zurückfahrens mittels des Wegaufnehmers die Verfahrstrecke erfasst wird. Für viele Anwendungen bevorzugt erfolgt das Zurückfahren um wenigstens 1 cm, gegebenenfalls auch um z. B. mindestens 2 oder 3 cm. Ein maximaler Verstellweg von 5 cm ist zumeist ausreichend.

Nachdem dann die Probe derart positioniert wurde, dass diese an der genannten Anschlagfläche anliegt, wird der Fühlstempel wieder zur Probenaufnahme bzw. Probe hin verfahren, bis der Fühlstempel an der Probe anstößt (Detektion wieder unter Verwendung der Kraftmessung und/oder Wegstreckenmessung), wobei die hierfür erforderliche Verfahrstrecke wieder mittels des Wegaufnehmers erfasst wird.

Die Differenz der beiden erfassten Wegstrecken liefert somit die Information über die Probenlänge, welche von der Steuereinrichtung berechnet und z. B. für den Benutzer ausgegeben und/oder (für eine spätere Berücksichtigung bei der Auswertung) in der Steuereinrichtung gespeichert werden kann.

Die Erfindung wird nachfolgend anhand von Ausführungsbeispielen mit Bezug auf die beigefügten Zeichnungen weiter beschrieben. Es stellen dar:
- Fig. 1: eine perspektivische Ansicht einer Vorrichtung zur Messung einer Längenänderung einer Probe gemäß eines ersten Ausführungsbeispiels,
- Fig. 2: eine Seitenansicht der Vorrichtung gemäß des ersten Beispiels,
- Fig. 3: eine weitere perspektivische Ansicht der Vorrichtung gemäß des ersten Beispiels,
- Fig. 4: eine weitere Seitenansicht der Vorrichtung gemäß des ersten Beispiels,
- Fig. 5: eine perspektivische Ansicht einer Vorrichtung zur Messung einer Längenänderung einer Probe gemäß eines zweiten Ausführungsbeispiels,
- Fig. 6: eine Seitenansicht der Vorrichtung gemäß des zweiten Beispiels,
- Fig. 7: eine weitere perspektivische Ansicht der Vorrichtung gemäß des zweiten Beispiels,
- Fig. 8: eine weitere Seitenansicht der Vorrichtung gemäß des zweiten Beispiels,
- Fig. 9: eine perspektivische Ansicht einer Vorrichtung zur Messung einer Längenänderung einer Probe gemäß eines dritten Ausführungsbeispiels,
- Fig. 10: eine Seitenansicht der Vorrichtung gemäß des dritten Beispiels,
- Fig. 11: eine weitere Seitenansicht der Vorrichtung gemäß des dritten Beispiels,
- Fig. 12: eine schematische Darstellung zur Veranschaulichung einer auslenkungskompensierenden "Reihenanordnung" von elastischen Körpern zur Verwendung bei einer Vorrichtung zur Messung einer Längenänderung einer Probe, und
- Fig. 13: eine schematische Darstellung zur Veranschaulichung einer auslenkungskompensierenden "Parallelanordnung" von elastischen Körpern zur Verwendung bei einer Vorrichtung zur Messung einer Längenänderung einer Probe.

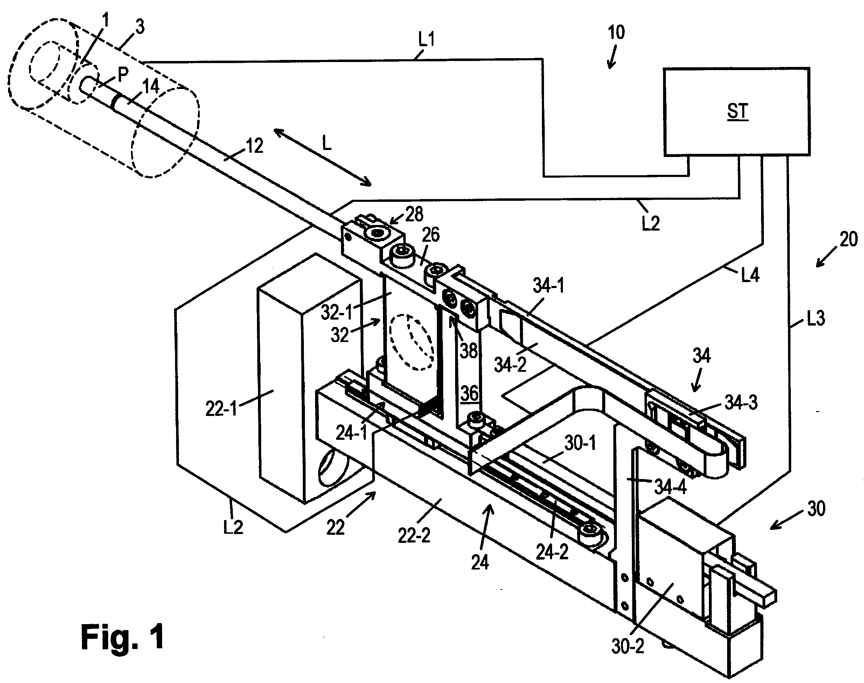

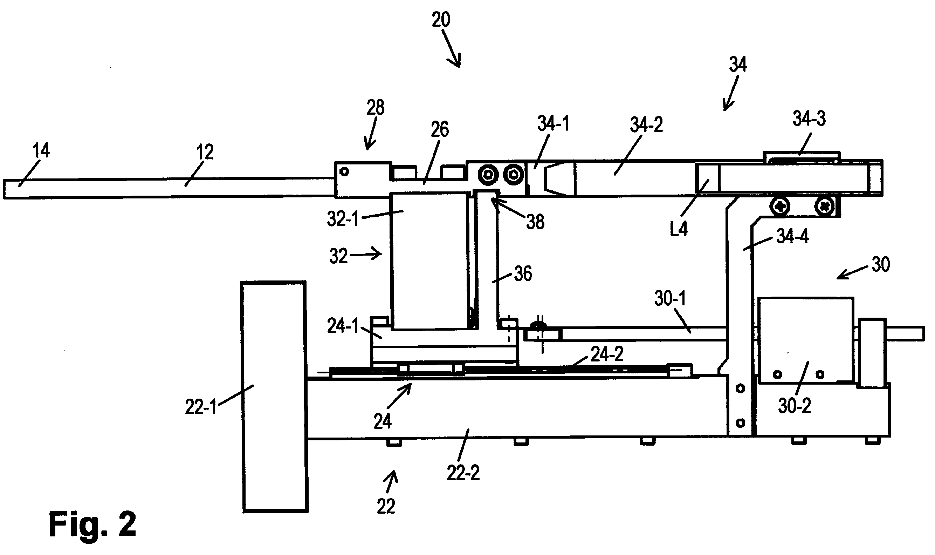

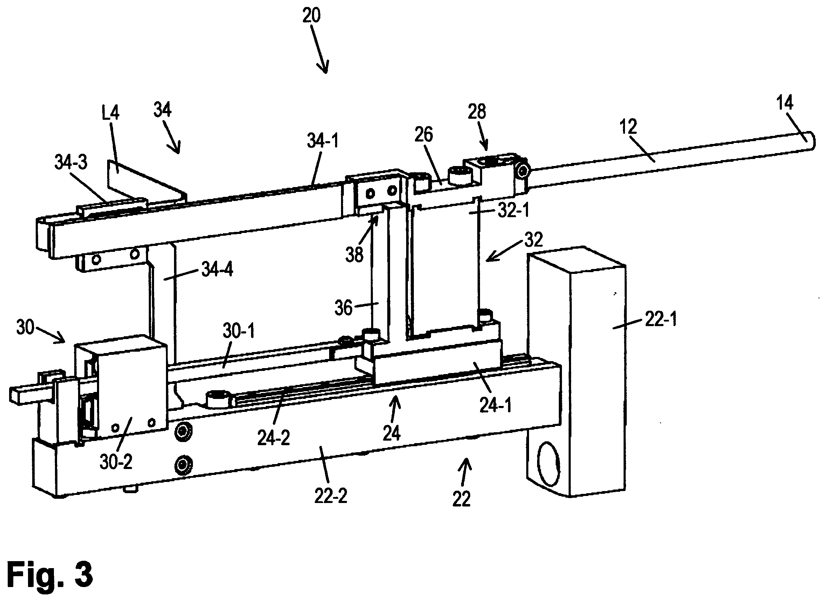

Die Fig. 1 bis 4 zeigen ein erstes Ausführungsbeispiel einer Vorrichtung 10 zur Messung einer Längenänderung einer Probe. Die Vorrichtung 10 wird in diesem Beispiel im Rahmen einer so genannten thermomechanischen Analyse (TMA) verwendet und bildet somit einen Bestandteil eines TMA-Gerätes.

Als weiterere Bestandteile des TMA-Gerätes sind in Fig. 1 gestrichelt dargestellt: ein Probenhalter 1 in einem gesteuert temperierbaren Ofen 3 zur Lagerung und ansteuerbaren Temperierung der Probe P, an welcher die TMA-Messung durchzuführen ist.

Bei der Messung wird die Längenänderung (hier z. B. resultierend aus einer Erwärmung oder Abkühlung der Probe P im Ofen 3) in einer Richtung gemessen, die nachfolgend als Längsrichtung bezeichnet wird und in Fig. 1 durch den Doppelpfeil L angegeben ist. Außerdem wird bei der Messung die Probe P einer vorbestimmten Kraftbelastung ausgesetzt, die ebenfalls in Längsrichtung L auf die Probe wirkt.

Für das hier veranschaulichte Beispiel einer TMA-Messvorrichtung ist unter dem Begriff "Kraftbelastung" eine während der Längen(änderungs)messung in Koordination mit einem zeitlichen Temperierungsverlauf ("Temperaturprogramm") vorgegebene zeitabhängige Kraft zu verstehen, welche auf die Probe P wirkt.

Die Vorrichtung 10 umfasst einen Fühlstempel 12, welcher bei der Messung mit einem Fühlstempelende 14 die vorbestimmte Kraft (hier: Druckkraft) auf die Probe P ausübt.

Das Material des Fühlstempels sollte bei dieser Anwendung eine möglichst geringe oder zumindest gut definierte thermische Ausdehnung besitzen, so dass diese thermische Ausdehnung das Messergebnis wenig beeinflusst bzw. im Rahmen eines Steuerprogrammes und/oder einer nachfolgenden Auswertung entsprechend berücksichtigt werden kann. Analoges gilt für das Material der Fühlstempelaufnahme.

Die Vorrichtung 10 umfasst des Weiteren eine Messeinrichtung 20, an welcher der Fühlstempel 12 angebracht ist und mittels welcher bei der Messung die aus der Längenänderung der Probe P in Längsrichtung L resultierende Bewegung des Fühlstempels 12 gemessen wird. Die Messeinrichtung 20 umfasst:
- eine stationäre Basis 22, die im dargestellten Beispiel ein erstes Basisteil 22-1 (z. B. zum Haltern des Ofens 3 bezüglich der Messeinrichtung 20) und ein zweites, langgestreckt in Längsrichtung L sich erstreckendes Basisteil 22-2 umfasst,
- eine an der stationären Basis 22 über eine Führungseinrichtung 24 in Längsrichtung L relativ zur stationären Basis 22 bewegbar gelagerte Fühlstempelaufnahme 26, an welcher der Fühlstempel 12 im dargestellten Beispiel mittels einer Schraubklemme 28 befestigt ist,
- eine ansteuerbare Antriebseinrichtung 30 zum Antreiben der Fühlstempelaufnahme 26 in Längsrichtung L relativ zur stationären Basis 22,
- eine Kraftmesseinrichtung 32 zum Erfassen der vom Fühlstempel 12 auf die Probe P ausgeübten Kraft,
- eine Steuereinrichtung ST, die dazu ausgebildet ist, die Antriebseinrichtung 30 abhängig von der mittels der Kraftmesseinrichtung 32 erfassten Kraft gemäß der vorbestimmten Kraftbelastung anzusteuern (Die Steuereinrichtung ST ist der Einfachheit halber lediglich in einer der Figuren 1 bis 4 (Fig. 1) eingezeichnet), und
- einen Wegaufnehmer 34 zur Messung der Bewegung des Fühlstempels 12 in Längsrichtung L relativ zur Basis 22.

Die Funktion der dargestellten Vorrichtung 10 lässt sich wie folgt beschreiben:

Ausgehend von der in Fig. 1 dargestellten Situation, bei welcher die Probe P bereits am Probenhalter 1 im Ofen 3 angeordnet ist und am dem Probenhalter 1 abgewandten Ende vom Fühlstempelende 14 kontaktiert wird, wird mittels eines in der Steuereinrichtung ST ablaufenden Steuerprogrammes ein "TMA-Messprogramm" durchgeführt, welches darin besteht, die Probe P gemäß eines vorgegebenen zeitlichen Temperaturverlaufes aufzuheizen, die Probe P hierbei mittels des Fühlstempels 12 gemäß eines Kraftprogrammes (hier: zeitabhängige Druckkraft) vorbestimmt vorzubelasten und die sich im zeitlichen Verlauf daraus ergebende Längenänderung der Probe P in Längsrichtung L zu messen.

Die Steuereinrichtung ST ist hierfür über Steuerleitungen L1, L2, L3 und L4 mit entsprechenden Vorrichtungskomponenten verbunden: Die Leitung L1 dient zur Übertragung eines Temperierungssteuersignals an den Ofen 3 bzw. eine darin integrierte Temperierungseinrichtung (z. B. elektrische Heizung). Die Leitung L2 dient zur Übertragung eines Kraftmesssignals (Messwert der auf die Probe P ausgeübten Kraft) von der Kraftmesseinrichtung 32 zur Steuereinrichtung ST. Die Leitung L3 dient zur Übertragung eines Antriebssteuersignals zur Antriebseinrichtung 30. Die Leitung L4 dient zur Übertragung eines von dem Wegaufnehmer 34 ausgegebenen Wegmesssignals.

Insbesondere das über die Leitung L4 übertragene, zeitabhängige Längenänderungssignal wird in der Steuereinrichtung ST gespeichert, um für eine entsprechende Auswertung nach Abschluss der Messung zur Verfügung zu stehen.

Während der Messung steuert die Steuereinrichtung ST mittels einer Ansteuerung der Antriebseinrichtung 30 die mittels des Fühlstempels 12 auf die Probe P ausgeübte Kraft. Dies funktioniert wie folgt: Der Fühlstempel 12 ist wie bereits erwähnt mittels der Schraubklemme 28 an der Fühlstempelbasis 26 angebracht, so dass eine entsprechende Belastung bzw. Verstellung der Fühlstempelaufnahme 26 unmittelbar auf den Fühlstempel 12 und somit weiter auf die Probe P überträgt.

Die Fühlstempelaufnahme 26 wird im dargestellten Beispiel nicht unmittelbar von der Antriebseinrichtung 30 angetrieben. Vielmehr ist die Fühlstempelaufnahme 26 wie in den Fig. 1 bis 4 ersichtlich mit einem in den Figuren oberen Ende eines elastischen Körpers 32-1 verbunden (hier: verschraubt), dessen in den Figuren unteres Ende mit einem Schlitten 24-1 der Führungseinrichtung 24 verbunden (hier: verschraubt) ist, welcher in Längsrichtung L verfahrbar an einer Führungsschiene 24-2 der Führungseinrichtung 24 geführt und mittels einer Schubstange 30-1 der Antriebseinrichtung 30 entsprechend verfahrbar ist. Das distale Ende der Schubstange 30-1 ist wie in den Figuren ersichtlich am Schlitten 24-1 angeschraubt. Dementsprechend bewirkt eine Ansteuerung der Antriebseinrichtung 30, die im dargestellten Beispiel einen über die Leitung L3 angesteuerten Piezoschrittmotor enthält, zunächst zu einer Verschiebung der Schubstange 30-1 und somit des Schlittens 24-1 in Längsrichtung L. Über den elastischen Körper 32-1 wird diese Schlittenbewegung über die Fühlstempelaufnahme 26 und den Fühlstempel 12 in eine entsprechende Kraft bzw. Kraftänderung an der Probe P umgesetzt.

Demnach kann die aus dem Schlitten 24-1, der Fühlstempelaufnahme 26 und dem dazwischen angeordneten elastischen Körper 32-1 gebildete Einheit auch als antreibbare "Fühlstempelbasis" bezeichnet werden, welche an der stationären Basis 22 über die Führungseinrichtung 24 in Längsrichtung L relativ zur stationären Basis 22 bewegbar gelagert ist und an welcher der Fühlstempel 12 befestigt (oder befestigbar) ist. Angetrieben wird die Fühlstempelbasis 24-1, 26, 32-1 in Längsrichtung L relativ zur stationären Basis 22 wie erläutert durch die ansteuerbare Antriebseinrichtung 30.

Der elastische Körper 32-1 bildet zusammen mit einem (in den Figuren nicht dargestellten) an der Leitung L2 angeschlossenen Dehnungsmessstreifen (z. B. an einer Außenfläche des elastischen Körpers 32-1 angebracht) die Kraftmesseinrichtung 32.

Insbesondere wenn der elastische Körper 32-1 aus einem metallischen Material gebildet ist, so kann anstelle eines Vollmaterials ein z. B. zumindest in einem zentralen Bereich ausgespartes Material eingesetzt werden, wie dies in Fig. 1 gestrichelt symbolisiert ist (hier: kreisrunde Aussparung in einem quaderförmigen Körper). Eine oder mehrere solcher Aussparungen des elastischen Körpers können auch bei unten noch beschriebenen weiteren Ausführungsbeispielen vorgesehen sein.

Mittels der Kraftmesseinrichtung 32 wird während der Messung die tatsächlich auf die Probe P ausgeübte Kraft in Abhängigkeit von der Zeit gemessen und bevorzugt als Analog/Digital-gewandeltes Signal über die Leitung L2 der Steuereinrichtung ST zugeführt (oder in der Steuereinrichtung Analog/Digital-gewandelt).

In der Steuereinrichtung ST ist auch die z. B. durch eine entsprechende Benutzereingabe vorgegebene Kraftbelastung, d. h. die im zeitlichen Verlauf der Messung auf die Probe P auszuübende Kraft ("Soll-Wert"), gespeichert.

Mittels des in der Steuereinrichtung ST ablaufenden Steuerprogrammes wird der gemessene "Ist-Wert" der Kraft durch entsprechende Ansteuerung der Antriebseinrichtung 30 auf den durch die vorgegebene Kraftbelastung vorgegebenen "Soll-Wert" geregelt.

Vorteilhaft führt eine in der Praxis unvermeidliche Reibung im Bereich der Führungseinrichtung 24 (zwischen Schliten 24-1 und Führungsschiene 24-2) nicht zu einer entsprechenden Verfälschung der Kraftmessung.

Ebenso führt die simultan durchgeführte Messung der Längenänderung der Probe P im dargestellten Ausführungsbeispiel nicht zu einer Verfälschung der Kraftmessung. Die Messung der Längenänderung ist im dargestellten Beispiel wie folgt realisiert: An der Fühlstempelaufnahme 26, deren Bewegung in Längsrichtung L der zu messenden Längenänderung der Probe P entspricht, ist ein Maßstabsträger 34-1 mit davon ausgebildetem oder im dargestellten Beispiel daran angebrachtem (z. B. aufgeklebtem) Maßstab 34-2 angebracht, so dass die Längenänderung der Probe P sich in eine entsprechende Verschiebung des Maßstabes 34-2 überträgt, welche somit in einfacher Weise gemessen werden kann.

Zu diesem Zweck umfasst der Wegaufnehmer 34 des Weiteren einen stationär gehaltenen optischen Sensor 34-3 zur Messung der Relativverschiebung zwischen diesem Sensor 34-3 und dem Maßstab 34-2. Der Maßstab 34-2 ist hierfür z. B. mit äquidistant über seine Länge verteilten Strichmarkierungen versehen bzw. ausgebildet, welche beim Vorbeilaufen des Maßstabes 34-2 mittels des optischen Sensors 34-3 und einer daran angeschlossenen (oder darin integrierten) Linearencoderelektronik erfasst werden, um ein für die Längenänderung der Probe P repräsentatives Messsignal zu erhalten (Die Anzahl der erfassten Markierungen ist ein Maß für die Längenänderung). Dieses Messignal wird über die Leitung L4 zur Steuereinrichtung ST zugeführt und dort für eine spätere Auswertung als zeitabhängiges Probenlängesignal digital gespeichert.

Die Linearencoderelektronik kann z. B. im Bereich des optischen Sensors 34-3 oder alternativ im Bereich der Steuereinrichtung ST angeordnet sein.

Das stationäre Halten des optischen Sensors 34-3 ist im dargestellten Beispiel durch einen Halter 34-4 bewerkstelligt, welcher einerseits mit dem Sensor 34-3 verbunden (hier: verschraubt) und andererseits mit der Basis 22 verbunden (hier: verschraubt) ist.

Mittels der dargestellten Vorrichtung 10 lässt sich somit vorteilhaft im Rahmen einer TMA-Analyse die Längenänderung der in Längsrichtung L vorbestimmt kraftbelasteten Probe P messen, wobei die vorbestimmte Kraft mittels des in Längsrichtung L sich erstreckenden Fühlstempels 12 auf die Probe P ausgeübt wird und die aus der Längenänderung der Probe P in Längsrichtung L resultierende Bewegung des Fühlstempels 12 berührungslos gemessen wird, wobei ein Antreiben der Fühlstempelbasis 24-1, 26, 32-1, an welcher der Fühlstempel 12 befestigt ist, in Längsrichtung L relativ zur stationären Basis 22 erfolgt, und wobei dieses Antreiben mittels der Steuersoftware abhängig von der durch den Fühlstempel 12 auf die Probe P ausgeübten und mittels der Kraftmesseinrichtung 32 erfassten Kraft gemäß der vorbestimmten Kraftbelastung erfolgt (Kraftregelung).

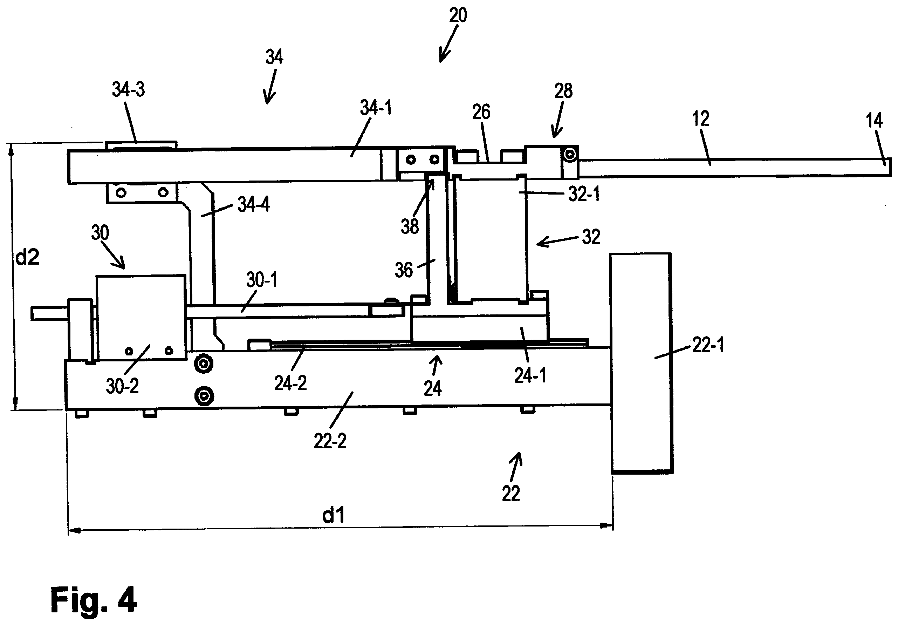

In Fig. 4 ist eine Baulänge (in Längsrichtung L) der Messeinrichtung 20 mit d1 und eine Bauhöhe mit d2 bezeichnet. Die Messeinrichtung 20 besitzt vorteilhaft einen insgesamt kompakten Aufbau, insbesondere eine Baubreite ist sehr gering.

Bei der dargestellten Vorrichtung 10 ist ein "Überlastungsschutz" für die Kraftmesseinrichtung 32 bzw. den elastischen Körper 32-1 vorgesehen, um die im Betrieb gegebenenfalls auftretende Relativbewegung zwischen dem Schlitten 24-1 und der Fühlstempelaufnahme 26 und somit die Verformung des elastischen Körpers 32-1 zu begrenzen. Dieser Überlastungsschutz umfasst im dargestellten Beispiel eine vertikal von dem Schlitten 24-1 aufragende Anschlagnase 36 (z. B. einstückig mit einer Schlittenkomponente ausgebildet), welche mit ihrem distalen Ende in eine Anschlageinbuchtung 38 der Fühlstempelaufnahme 26 eingreift. In Längsrichtung L betrachtet ergibt sich im unverformten Zustand des elastischen Körpers 32-1 ein jeweils geringer Abstand zwischen der Anschlagnase 36 und den entsprechenden von der Einbuchtung 38 ausgebildeten Anschlagflächen. Bei entsprechender (maximal zulässiger) Verformung des elastischen Körpers 32-1 gelangt die Anschlagnase 36 zur Anlage gegen eine dieser Anschlagflächen, so dass eine weitere Verformung des elastischen Körpers 32-1 verhindert wird.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

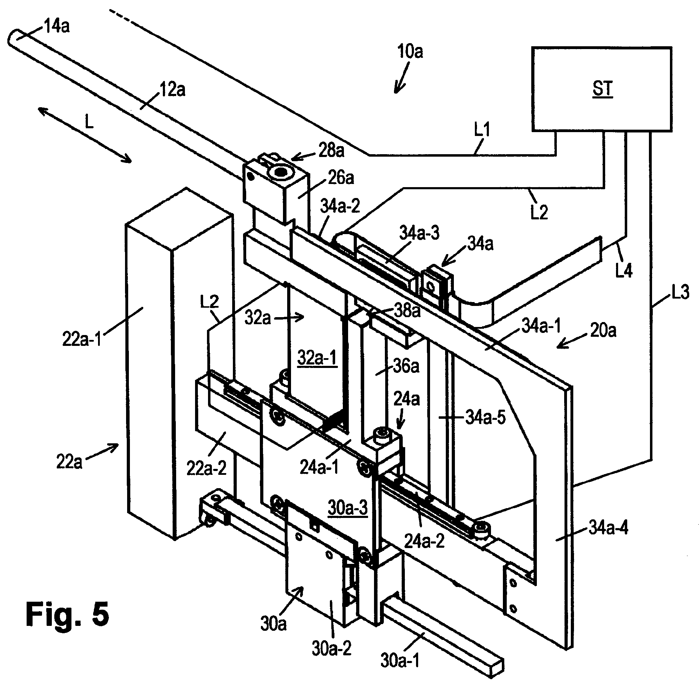

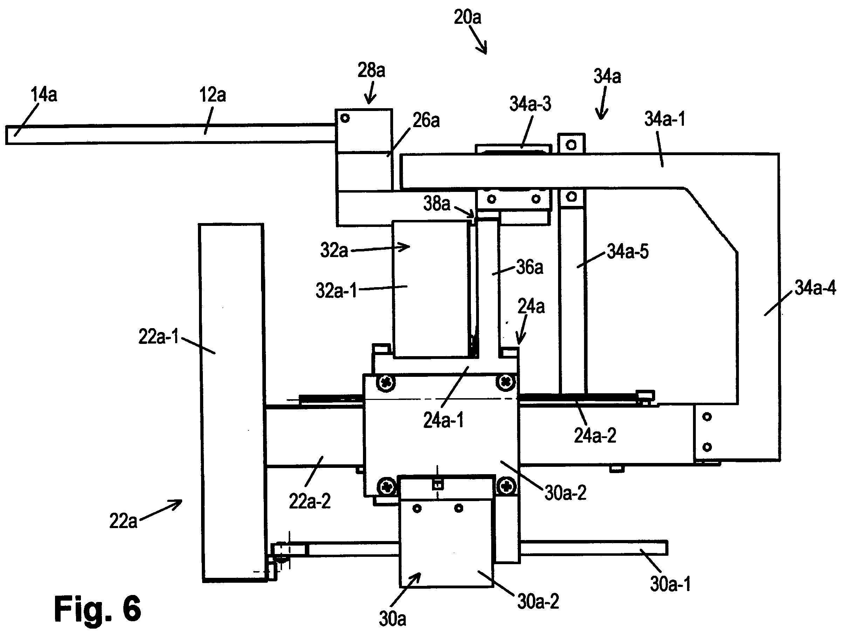

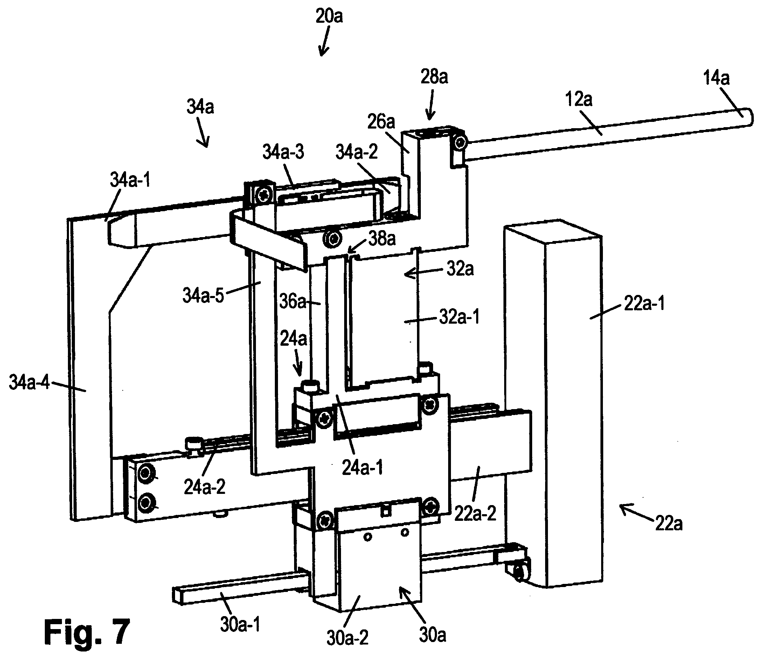

Die Fig. 5 bis 8 zeigen ein zweites Ausführungsbeispiel einer Vorrichtung 10a zur Messung einer Längenänderung einer Probe. Der Einfachheit halber ist eine zugehörige Steuereinrichtung ST samt Leitungsanordnung wieder nur in einer dieser Figuren (Fig. 5) eingezeichnet.

Gegenüber dem bereits beschriebenen Ausführungsbeispiel gemäß der Fig. 1 bis 4 ist die Vorrichtung 10a gemäß der Fig. 5 bis 8 an zwei Stellen modifiziert, nämlich
- einerseits im Bereich einer Führungseinrichtung 24a, mittels welcher eine Fühlstempelbasis (Schlitten 24a-1, Fühlstempelaufnahme 26a und elastischer Körper 32a-1) in Längsrichtung L relativ zu einer stationären Basis 22a bewegbar gelagert ist, und
- andererseits im Bereich der Fühlstempelbasis bzw. eines daran angegliederten Wegaufnehmers 34a zur Messung der Bewegung eines Fühlstempels 12a in Längsrichtung L relativ zur Basis 22a.

Diese beiden Modifikationen, welche abweichend vom dargestellten Beispiel auch jeweils als solche zur Modifikation des bereits beschriebenen Ausführungsbeispiels verwendet werden könnten, werden nachfolgend detaillierter beschrieben.

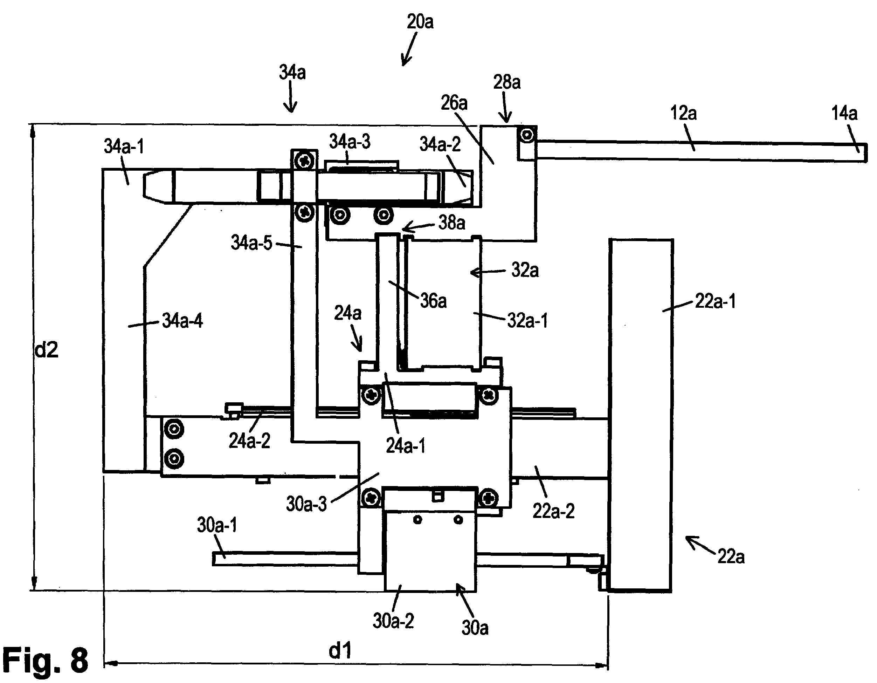

Die Modifikation im Bereich der Führungseinrichtung 24a besteht darin, dass ein Piezoschrittmotor 30a-2 nicht stationär (d. h. an der Basis 22a) gehalten ist, sondern auf einer zugehörigen Schubstange 30a-1 verfährt (bzw "reitet"), welche stationär mit der Basis 22a verbunden (hier: verschraubt) ist. Dementsprechend wird bei einer Ansteuerung des verwendeten Antriebes (hier: Piezoschrittmotor 30a-2) nicht die Schubstange 30a-1 bewegt, sondern der Antrieb 30a-2 selbst. Zur Übertragung dieser Bewegung auf den Schlitten 24a-1 der Führungseinrichtung 24a ist daher der Piezoschrittmotor 30a-2 bzw. dessen Gehäuse über ein Paar von Verbindungsplatten 30a-3 am Piezoschrittmotor 30a-2 angebunden (hier: mittels Verschraubungen). Ein Vorteil dieser Modifikation besteht darin, dass eine Baulänge d1 (siehe Fig. 8) im Vergleich zum ersten Ausführungsbeispiel geringer bemessen werden kann.

Die Modifikation hinsichtlich der Messung der Bewegung des Fühlstempels 12a besteht darin, dass ein Linearmaßstab 34a-2 des Wegaufnehmers 34a stationär (bezüglich der Basis 22a) angeordnet ist und ein optischer Sensor 34a-3 mit dem Fühlstempel 12a bzw. der Fühlstempelaufnahme 26a "mitfahrend" angeordnet ist, und nicht umgekehrt (wie bei dem ersten Ausführungsbeispiel). Zu diesem Zweck lagert ein mit der stationären Basis 22a verbundener Halter 34a-4 einen Maßstabsträger 34a-1 mitsamt dem daran angeordneten Maßstab 34a-2, wobei dieser Halter 34a-4 im dargestellten Beispiel einstückig mit dem Maßstabsträger 34a-1 ausgebildet ist. Zur Bewerkstelligung der schubfesten Verbindung zwischen dem optischen Sensor 34a-3 und der Fühlstempelaufnahme 26a ist eine feste Verbindung (hier: Verschraubung) zwischen diesen beiden Komponenten vorgesehen. Außerdem sollte, wie in den Fig. 5 bis 8 auch dargestellt, zweckmäßigerweise ein weiterer Halter 34a-5 vorgesehen sein, welcher z. B. einerseits mit einer der Verbindungsplatten 30a-3 (z. B. einstückig) verbunden sein kann und andererseits einen Abschnitt der als Flachbandkabel ausgeführten Leitung L2 im Sinne einer "Zugentlastung" stationär bezüglich des Schlittens 24a-1 lagert. Ansonsten bestünde die Gefahr, dass eine über die Leitung L2 unkontrolliert einwirkende Kraft auf die Fühlstempelaufnahme 26a einwirkt und somit die Kraftmessung verfälscht.

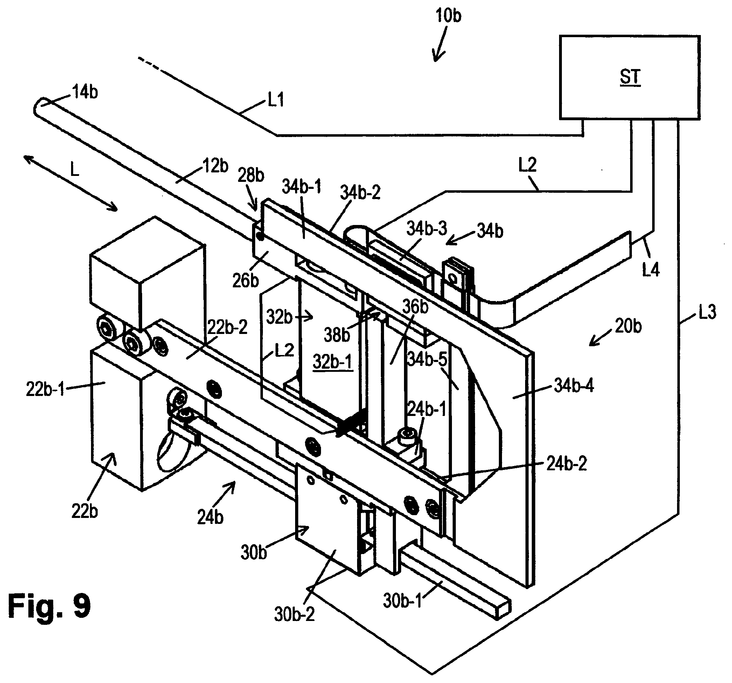

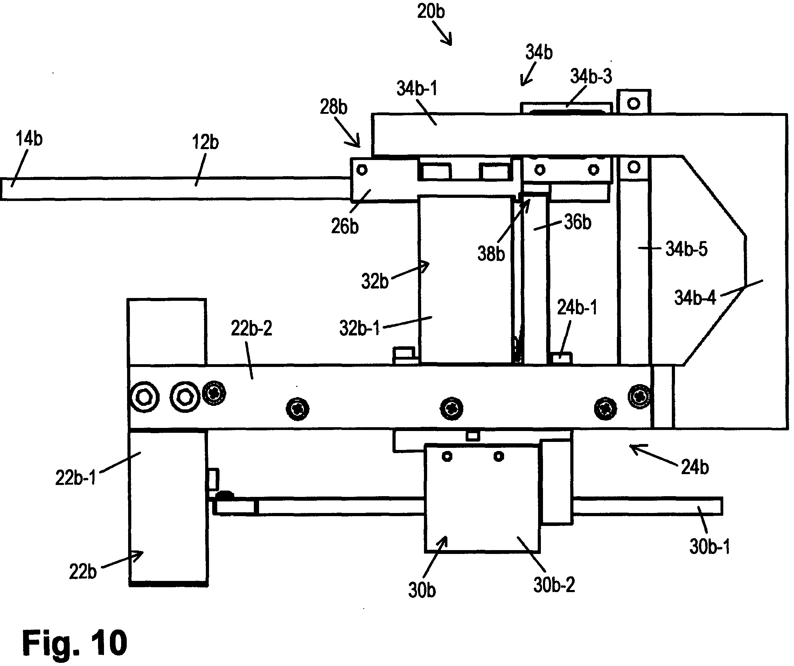

Die Fig. 9 bis 11 zeigen ein drittes Ausführungsbeispiel einer Vorrichtung 10b zur Messung einer Längenänderung einer Probe. Eine zugehörige Steuereinrichtung ST samt Leitungsanordnung ist wieder lediglich in einer der Figuren (Fig. 9) mit eingezeichnet.

Gegenüber dem bereits beschriebenen zweiten Ausführungsbeispiel (Fig. 5 bis 8) ist die Vorrichtung 10b gemäß der Fig. 9 bis 11 im Bereich einer Führungseinrichtung 24b zur bewegbaren Lagerung einer Fühlstempelbasis bzw. Fühlstempelaufnahme 26b in Längsrichtung L relativ zu einer stationären Basis 22b modifiziert.

Nämlich ist eine Führungsschiene 24b-2 im Vergleich zum zweiten Ausführungsbeispiel um 90° gedreht (um deren Längsachse) orientiert angeordnet. Die Führungsschiene 24b-2 steht in den Fig. 9 bis 11 demnach in einer Horizontalrichtung von einem in Längsrichtung L sich erstreckenden Halteteil 22b-2 der Basis 22b ab. Das Halteteil 22b-2 ist vorteilhaft als relativ dünnes, vertikal orientiertes Blechteil ausgebildet.

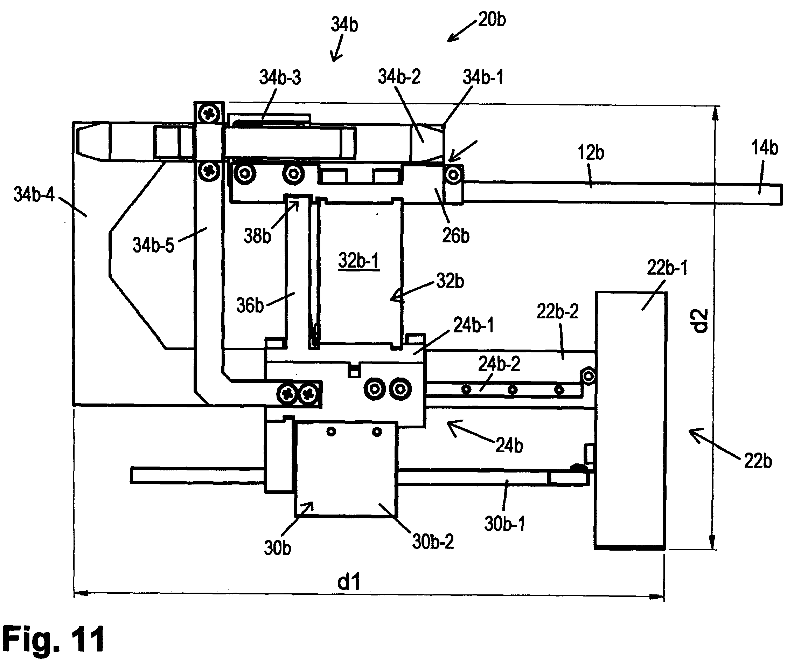

Vorteilhaft kann bei dieser Ausführungsform eine Bauhöhe d2 (siehe Fig. 11) im Vergleich zur zweiten Ausführungsform (siehe Fig. 8) verringert werden.

Die in Längsrichtung L schubfeste Verbindung zwischen einem Antriebsmotor 30b-2 einer Antriebseinrichtung 30b einerseits und einem Schlitten 24b-1 der Führungseinrichtung 24b andererseits erfordert hierbei vorteilhaft keine das in Längsrichtung L sich erstreckende Halteteil 22b-2 umgreifende Anordnung von Verbindungsplatten (wie bei der Ausführung gemäß der Fig. 5 bis 8). Vielmehr ist bei der Vorrichtung 10b eine unmittelbare Verbindung (z. B. Schraubverbindung) zwischen dem Antriebsmotor 30b-2 und dem Schlitten 24b-1 vorgesehen.

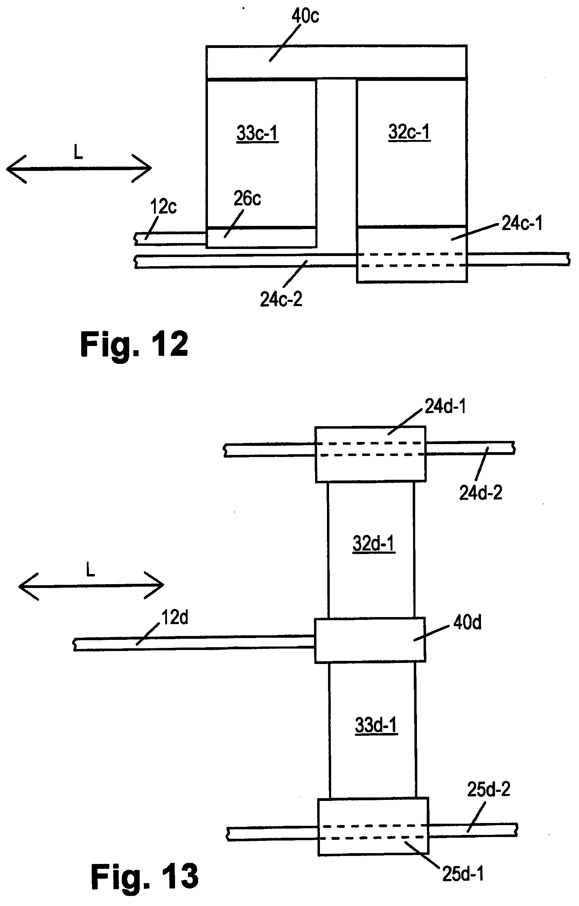

Die Fig. 12 und 13 sind schematische Darstellungen zur Veranschaulichung zweier Ausführungsvarianten eines Details einer Messvorrichtung der hier beschriebenen Art. Dieses nachfolgend näher beschriebene Detail kann somit insbesondere zur Modifikation der oben bereits beschriebenen Ausführungsbeispiele (Vorrichtungen 10, 10a und 10b) herangezogen werden.

Bei den oben bereits beschriebenen Ausführungsbeispielen umfasst die Fühlstempelbasis jeweils einen elastischen Körper (32-1, 32a-1 bzw. 32b-1), der auf einer Seite (in den Figuren unten) mit einem unmittelbar von der Führungseinrichtung geführten Schlitten verbunden ist und auf einer entgegengesetzten Seite (in den Figuren oben) mit der Fühlstempelaufnahme der Fühlstempelbasis verbunden ist. Im Betrieb kommt es, je nach eingestellter Kraft, zu einer mehr oder weniger großen Verformung des elastischen Körpers und einer entsprechenden Relativverlagerung der Fühlstempelaufnahme relativ zum Schlitten in Längsrichtung L. Je nach Ausgestaltung (Formgebung und Anordnung) des elastischen Körpers kommt es hierbei jedoch außerdem zu einer, wenn auch sehr kleinen Relativverlagerung zwischen Fühlstempelaufnahme und Schlitten quer zur Längsrichtung L. Eine solche Querverlagerung ist im Allgemeinen unerwünscht. Zur Beseitigung dieser Querverlagerung kann die mit den Fig. 12 und 13 veranschaulichten Modifikation eingesetzt werden.

Den Ausführungsvarianten der Fig. 12 und 13 ist gemein, dass zwei elastische Körper in einer "Reihenanordnung" (Fig. 12) oder einer "Parallelanordnung" (Fig. 13) als Verbindungsglied zwischen der Fühlstempelaufnahme und dem Schlitten derart eingesetzt werden, dass deren einzelne, im Betrieb erfolgende Kontraktionen bzw. Expansionen in Querrichtung sich gegenseitig wenigstens teilweise, insbesondere im Wesentlichen vollständig kompensieren.

Fig. 12 veranschaulicht die erste Variante, bei welcher ein Schlitten 24c-1 an einer an der stationären Basis ausgebildeten oder fest mit dieser Basis verbundenen Führungsschiene 24c-2 in Längsrichtung L geführt und mit einer Seite (in Fig. 12 unten) eines ersten elastischen Körpers 32c-1 verbunden ist. Eine entgegengesetzte zweite Seite (in Fig. 12 oben) des elastischen Körpers 32c-1 ist über ein Verbindungsglied 40c mit einer Seite (in Fig. 12 oben) eines zweiten elastischen Körpers 33c-1 verbunden. Eine entgegengesetzte Seite (in Fig. 12 unten) des zweiten elastischen Körpers 33c-1 ist mit einer Fühlstempelaufnahme 26c verbunden, an welcher ein Fühlstempel 12c befestigt (oder befestigbar) ist.

Wenn die Anordnung gemäß Fig. 12 bei einer Messvorrichtung der hier beschriebenen Art, z. B. bei einer der Vorrichtungen 10, 10a und 10b der oben bereits detaillierter beschriebenen Art eingesetzt wird, so ergibt sich vorteilhaft eine Kompensation der im Betrieb stattfindenden Kontraktionen bzw. Expansionen der beiden elastischen Körper 32c-1 und 33c-1, so dass sich die Relativverlagerung zwischen der betreffenden Fühlstempelaufnahme 26c und somit des Fühlstempels 12c einerseits und dem betreffendenSchlitten 24c-1 andererseits letztlich im Wesentlichen auf eine Verlagerung in Längsrichtung L beschränkt.

Für eine vorteilhaft möglichst vollständige Kompensation der Querbewegungen kann z. B. vorgesehen sein, dass die elastischen Körper 32c-1 und 33c-1 im Wesentlichen identisch ausgebildet sind.

Die Ausführungsvariante gemäß Fig. 13 unterscheidet sich von der Variante gemäß Fig. 12 lediglich darin, dass anstatt einer "Reihenanordnung" von zwei elastischen Körpern 32c-1 und 33c-1 eine "Parallelanordnung" von elastischen Körpern 32d-1 und 33d-1 vorgesehen ist.

Eine Führungseinrichtung in Fig. 13 umfasst hierfür zwei Schlitten 24d-1 und 25d-1, die jeweils in Längsrichtung L an einer zugehörigen Führungsschiene 24d-2 bzw. 25d-2 geführt und jeweils mit einer ersten Seite des elastischen Körpers 32d-1 bzw. 33d-1 verbunden sind. Die anderen Seiten der elastischen Körper 32d-1 und 33d-1 sind über ein Verbindungsglied 40d miteinander verbunden, an welchem ein Fühlstempel 12d befestigt (oder befestigbar) ist. Auch die Varinate gemäß Fig. 13 führt vorteilhaft zu einer Kompensation der an den einzelnen elastischen Körpern im Betrieb auftretenden Querbewegungen.

Wenngleich bei den Beispielen gemäß der Fig. 12 und 13 die beiden "elastischen Körper" als separate Bauteile vorgesehen sind, so können diese abweichend davon auch z. B. einstückig zusammenhängend ausgebildet sein. Bei dem Beispiel gemäß Fig. 12 wären dann die Komponenten 32c-1, 33c-1 und 40c durch einen entsprechend formgestalteten elastischen Körper zu realisieren (und bei dem Beispiel gemäß Fig. 13 die Komponenten 32d-1, 33d-1 und 40c).

Außerdem könnten abweichend von den konkreten Beispielen gemäß der Fig. 12 und 13 auch mehr als zwei "elastische Körper" in Reihenanordnung (vgl. Fig. 12) bzw. in Paralellanordnung (vgl. Fig.. 13) eingesetzt (und ggf. durch ein einziges entsprechend formgestaltetes Bauteil realisiert werden).

Den oben bereits beschriebenen Ausführungsbeispielen von Messvorrichtungen 10, 10a, 10b (gegebenenfalls mit einer der in den Fig. 12 und 13 veranschaulichten Modifikationen) liegt ein im Rahmen der Erfindung ganz allgemein vorteilhaftes "Anordnungsprinzip" der Vorrichtungskomponenten zugrunde, welches wie folgt beschrieben werden kann:

Die Vorrichtung besitzt entsprechend der Erstreckungsrichtung des Fühlstempels eine Längsrichtung (Längsrichtung L), in welcher, in Verlängerung einer Fühlstempelachse, hintereinander die Fühlstempelaufnahme (bzw. Fühlstempelbasis) und der Wegaufnehmer angeordnet sind, wobei ebenfalls in dieser Längsrichtung hintereinander, jedoch parallel versetzt (in den Figuren der Ausführungsbeispiele vertikal nach unten versetzt) eine in Längsrichtung sich langgestreckt erstreckende Führungseinrichtung (bevorzugt nach dem "Führungsschienen"-Prinzip) angeordnet ist, und wobei im Raum (Versatzraum) zwischen diesen beiden in Längsrichtung verlaufenden Vorrichtungsbereichen bevorzugt der erwähnte elastische Körper bzw. die damit ausgebildete Kraftmesseinrichtung untergebracht ist. Damit ist eine insgesamt sehr kompakte Vorrichtung geschaffen.

Hierbei gibt es für die Anordnung der Antriebseinrichtung zwei bevorzugte Anordnungsstellen. Zum einen kann die Antriebseinrichtung wie bei dem Beispiel gemäß der Fig. 1 bis 4 in Längsrichtung sich an die Führungseinrichtung anschließen und z. B. mit der erwähnten Schubstange auf einen Schlitten der Führungseinrichtung einwirken. Zum anderen kann die Antriebseinrichtung, wie z. B. bei den Beispielen gemäß der Fig. 5 bis 8 und der Fig. 9 bis 11, bezüglich der Führungseinrichtung mit einem Versatz quer zur Längsrichtung angeordnet sein, beispielsweise auf der der Fühlstempelaufnahme abgewandten Seite der Führungseinrichtung.

Wenngleich die oben beschriebenen Ausführungsbeispiele von Vorrichtungen 10, 10a und 10b für den Einsatz in einem TMA-Gerät beschrieben wurden, so versteht sich, dass diese durch entsprechende Modifikation der Steuereinrichtung bzw. der darauf ablaufenden Steuersoftware prinzipiell auch in einem DMA-Gerät eingesetzt werden könnten (ggf. unter Anpassung/Optimierung noch weiterer Details wie z. B. der Verwendung einer Tauchspulenanordnung anstelle des Piezoschrittmotors).

Bei einem mit der erfindungsgemäßen Vorrichtung geschaffenen Gerät (z. B. TMA- bzw. DMA-Gerät oder Dilatometer) kann die "Längsrichtung" der Vorrichtung z. B. vertikal (z. B. bevorzugt für TMA- und DMA-Gerät) oder z. B. horizontal (z. B. bevorzugt für Dilatometer) orientiert sein.

## Patentansprüche

1. Vorrichtung (10) zur Messung einer Längenänderung einer in einer Richtung, nachfolgend als Längsrichtung (L) bezeichnet, vorbestimmt kraftbelasteten Probe (P), mit einem in Längsrichtung (L) sich erstreckenden Fühlstempel (12), welcher bei der Messung mit einem Fühlstempelende (14) die vorbestimmte Kraft auf die Probe (P) ausübt, und mit einer Messeinrichtung (20), mittels welcher bei der Messung die aus der Längenänderung der Probe (P) in Längsrichtung (L) resultierende Bewegung des Fühlstempels (12) gemessen wird, wobei die Messeinrichtung (20) umfasst:
- eine stationäre Basis (22),
- eine an der stationären Basis (22) über eine Führungseinrichtung (24) in Längsrichtung (L) relativ zur stationären Basis (22) bewegbar gelagerte Fühlstempelbasis (24-1, 26, 32-1), an welcher der Fühlstempel (12) befestigbar oder befestigt ist,
- eine ansteuerbare Antriebseinrichtung (30) zum Antreiben der Fühlstempelbasis (24-1, 26, 32-1) in Längsrichtung (L) relativ zur stationären Basis (22),
- eine Kraftmesseinrichtung (32) zum Erfassen der vom Fühlstempel (12) auf die Probe (P) ausgeübten Kraft,
- einen Wegaufnehmer (34) zur Messung der Bewegung des Fühlstempels (12) in Längsrichtung (L) relativ zur Basis (22), und
- eine Steuereinrichtung (ST), die dazu ausgebildet ist, die Antriebseinrichtung (30) abhängig von der mittels der Kraftmesseinrichtung (32) erfassten Kraft gemäß der vorbestimmten Kraftbelastung anzusteuern,
**dadurch gekennzeichnet, dass** die Fühlstempelbasis (24-1, 26, 32-1) einen von der Führungseinrichtung (24) unmittelbar geführten Schlitten (24-1) und eine unmittelbar mit dem Fühlstempel (12) verbindbare oder verbundene Fühlstempelaufnahme (26) aufweist, wobei der Schlitten (24-1) und die Fühlstempelaufnahme (26) über einen elastisch deformierbaren Körper (33-1) miteinander verbunden sind, und dass die Kraftmesseinrichtung (32) als Verformungsmesseinrichtung zur Messung der Verformung des elastischen Körpers (32-1) ausgebildet ist.

2. Vorrichtung (10) zur Messung einer Deformationskraft an einer in einer Richtung, nachfolgend als Längsrichtung (L) bezeichnet, vorbestimmt deformierten Probe (P), mit einem in Längsrichtung (L) sich erstreckenden Fühlstempel (12), welcher bei der Messung mit einem Fühlstempelende (14) die vorbestimmte Deformation der Probe (P) bewirkt, und mit einer Messeinrichtung (20), mittels welcher bei der Messung die mit der Deformation der Probe (P) in Längsrichtung (L) einhergehende Deformationskraft gemessen wird, wobei die Messeinrichtung (20) umfasst:
- eine stationäre Basis (22),
- eine an der stationären Basis (22) über eine Führungseinrichtung (24) in Längsrichtung (L) relativ zur stationären Basis (22) bewegbar gelagerte Fühlstempelbasis (24-1, 26, 32-1), an welcher der Fühlstempel (12) befestigbar oder befestigt ist,
- eine ansteuerbare Antriebseinrichtung (30) zum Antreiben der Fühlstempelbasis (24-1, 26, 32-1) in Längsrichtung (L) relativ zur stationären Basis (22),
- eine Kraftmesseinrichtung (32) zum Erfassen der vom Fühlstempel (12) auf die Probe (P) ausgeübten Kraft,
- einen Wegaufnehmer (34) zur Messung der Bewegung des Fühlstempels (12) in Längsrichtung (L) relativ zur Basis (22), und
- eine Steuereinrichtung (ST), die dazu ausgebildet ist, die Antriebseinrichtung (30) abhängig von der mittels des Wegaufnehmers (34) erfassten Bewegung gemäß der vorbestimmten Deformation anzusteuern,
**dadurch gekennzeichnet, dass** die Fühlstempelbasis (24-1, 26, 32-1) einen von der Führungseinrichtung (24) unmittelbar geführten Schlitten (24-1) und eine unmittelbar mit dem Fühlstempel (12) verbindbare oder verbundene Fühlstempelaufnahme (26) aufweist, wobei der Schlitten (24-1) und die Fühlstempelaufnahme (26) über einen elastisch deformierbaren Körper (33-1) miteinander verbunden sind, und dass die Kraftmesseinrichtung (32) als Verformungsmesseinrichtung zur Messung der Verformung des elastischen Körpers (32-1) ausgebildet ist.

3. Vorrichtung (10) nach Anspruch 1 oder 2, wobei die Steuereinrichtung (ST) dazu ausgebildet ist, gemäß eines Betriebsmodus eine über die gesamte Messung konstante Kraftbelastung bzw. Deformation der Probe (P) vorzusehen.

4. Vorrichtung (10) nach einem der vorangehenden Ansprüche, wobei die Steuereinrichtung (ST) dazu ausgebildet ist, gemäß eines Betriebsmodus eine über die Messung variable Kraftbelastung bzw. Deformation der Probe (P) vorzusehen.

5. Vorrichtung (10) nach einem der vorangehenden Ansprüche, wobei zwischen Schlitten (24-1) und Fühlstempelaufnahme (26) ein mechanischer Anschlag ausgebildet ist, derart, dass eine Relativbewegung zwischen Schlitten (24-1) und Fühlstempelaufnahme (26) und somit die Verformung des elastischen Körpers (32-1) begrenzt ist.

6. Vorrichtung (10) nach einem der vorangehenden Ansprüche, wobei die Antriebseinrichtung (30) einen Schrittmotor (30-2), insbesondere Piezoschrittmotor, zur schrittweisen Verstellbarkeit der Fühlstempelbasis (24-1, 26, 32-1) relativ zur stationären Basis (22) aufweist.

7. Vorrichtung (10) nach einem der vorangehenden Ansprüche, wobei der Wegaufnehmer (34) durch ein optisches Wegmesssystem (34-1, 34-2, 34-3) gebildet ist.

8. Vorrichtung (10) nach Anspruch 7, wobei das optische Wegmesssystem (34-1, 34-2, 34-3) einen Linearmaßstab (34-2) und einen Sensor (34-3) mit angeschlossener Linearencoderelektronik umfasst, wobei der Linearmaßstab (34-2) am Fühlstempel (12) oder einem damit in Längsrichtung schubfest verbundenen Teil (34-1) angeordnet ist, und der Sensor (34-3) stationär angeordnet ist, oder umgekehrt.

9. Vorrichtung (10) nach einem der vorangehenden Ansprüche, wobei die Vorrichtung (10) ferner einen ansteuerbar temperierbaren Probenraum (3) mit einem darin zur Lagerung der Probe (P) vorgesehenen Probenhalter (1) aufweist und die Steuereinrichtung (ST) ferner dazu ausgebildet ist, bei der Messung eine vorbestimmte zeitabhängige Temperierung des Probenraumes (3) anzusteuern.

10. Verfahren zur Messung einer Längenänderung einer in einer Richtung, nachfolgend als Längsrichtung (L) bezeichnet, vorbestimmt kraftbelasteten Probe (P), bei welchem die vorbestimmte Kraft mittels eines in Längsrichtung (L) sich erstreckenden Fühlstempels (12) auf die Probe (P) ausgeübt wird und die aus der Längenänderung der Probe (P) in Längsrichtung (L) resultierende Bewegung des Fühlstempels (12) gemessen wird, und bei welchem ein Antreiben einer Fühlstempelbasis (24-1, 26, 32-1), an welcher der Fühlstempel (12) befestigt ist, in Längsrichtung (L) relativ zu einer stationären Basis (22) erfolgt, wobei dieses Antreiben abhängig von der durch den Fühlstempel (12) auf die Probe (P) ausgeübten und mittels einer Kraftmesseinrichtung (32) gemessenen Kraft gemäß der vorbestimmten Kraftbelastung erfolgt,
**dadurch gekennzeichnet, dass** die Fühlstempelbasis (24-1, 26, 32-1) einen Schlitten (24-1) aufweist, der von der Führungseinrichtung (24) unmittelbar geführt wird, und eine Fühlstempelaufnahme (26) aufweist, die unmittelbar mit dem Fühlstempel (12) verbunden ist, wobei der Schlitten (24-1) und die Fühlstempelaufnahme (26) über einen elastisch deformierbaren Körper (33-1) miteinander verbunden sind,
und dass die Kraftmessung dadurch bewerkstelligt wird, dass die Verformung des elastischen Körpers (32-1) gemessen wird.

11. Verfahren zur Messung einer Deformationskraft an einer in einer Richtung, nachfolgend als Längsrichtung (L) bezeichnet, vorbestimmt deformierten Probe (P), bei welchem die vorbestimmte Deformation der Probe (P) mittels eines in Längsrichtung (L) sich erstreckenden Fühlstempels (12) bewirkt wird und die mit der Deformation der Probe (P) in Längsrichtung (L) einhergehende Deformationskraft gemessen wird, und bei welchem ein Antreiben einer Fühlstempelbasis (24-1, 26, 32-1), an welcher der Fühlstempel (12) befestigt ist, in Längsrichtung (L) relativ zu einer stationären Basis (22) erfolgt, wobei dieses Antreiben abhängig von der durch den Fühlstempel (12) an der Probe (P) bewirkten und mittels des Wegaufnehmers (34) erfassten Bewegung gemäß der vorbestimmten Deformation erfolgt,
**dadurch gekennzeichnet, dass** die Fühlstempelbasis (24-1, 26, 32-1) einen Schlitten (24-1) aufweist, der von der Führungseinrichtung (24) unmittelbar geführt wird, und eine Fühlstempelaufnahme (26) aufweist, die unmittelbar mit dem Fühlstempel (12) verbunden ist, wobei der Schlitten (24-1) und die Fühlstempelaufnahme (26) über einen elastisch deformierbaren Körper (33-1) miteinander verbunden sind,
und dass die Messung der Deformationskraft dadurch bewerkstelligt wird, dass die Verformung des elastischen Körpers (32-1) gemessen wird.

## Claims

1. A device (10) for measuring a length change of a sample (P), which is force-loaded in a predetermined manner in a direction, referred to hereinafter as a longitudinal direction (L), with a touching pushrod (12) extending in longitudinal direction (L), said touching pushrod exerting the predetermined force on the sample (P) during the measurement with a touching pushrod end (14), and with a measuring device (20), by means of which the movement of the touching pushrod (12) resulting from the length change of the sample (P) is measured in longitudinal direction (L), wherein the measuring device (20) comprises:
- a stationary base (22),
- a touching pushrod base (24-1, 26, 32-1) mounted on the stationary base (22) so as to be mobile in longitudinal direction (L) relative to the stationary base (22) by means of a guide device (24), to which touching pushrod base the touching pushrod (12) can be fixed or is fixed,
- a controllable drive device (30) for driving the touching pushrod base (24-1, 26, 32-1) in longitudinal direction (L) relative to the stationary base (22),
- a force measuring device (32) for detecting the force exerted by the touching pushrod (12) on the sample (P),
- a position pickup (34) for measuring the movement of the touching pushrod (12) in longitudinal direction (L) relative to the stationary base (22), and
- a control device (ST) which is designed to control the drive device (30) depending on the force detected by means of the force measuring device (32) in accordance with the predetermined force load,
**characterised in that** the touching pushrod base (24-1, 26, 32-1) comprises a carriage (24-1) guided directly by the guide device (24) and a touching pushrod pickup (26) directly connected or connectable to the touching pushrod (12), wherein the carriage (24-1) and the touching pushrod pickup (26) are connected to one another by means of an elastically deformable body (33-1), and that the force measuring device (32) is constituted as a strain gauge for measuring the deformation of the elastic body (32-1).

2. A device (10) for measuring a deformation force on a sample (P) deformed in a predetermined manner in a direction, referred to hereinafter as a longitudinal direction (L), with a touching pushrod (12) extending in longitudinal direction (L), said touching pushrod bringing about the predetermined deformation of the sample (P) during the measurement with a touching pushrod end (14), and with a measuring device (20), by means of which the deformation force accompanying the deformation of the sample (P) in longitudinal direction (L) is measured during the measurement, wherein the measuring device (20) comprises:
- a stationary base (22),
- a touching pushrod base (24-1, 26, 32-1) mounted on the stationary base (22) so as to be mobile in longitudinal direction (L) relative to the stationary base (22) by means of a guide device (24), to which touching pushrod base the touching pushrod (12) can be fixed or is fixed,
- a controllable drive device (30) for driving the touching pushrod base (24-1, 26, 32-1) in longitudinal direction (L) relative to the stationary base (22),
- a force measuring device (32) for detecting the force exerted by the touching pushrod (12) on the sample (P),
- a position pickup (34) for measuring the movement of the touching pushrod (12) in longitudinal direction (L) relative to the base (22), and
- a control device (ST) which is designed to control the drive device (30) depending on the movement detected by means of the position pickup (34) in accordance with the predetermined deformation,
**characterised in that** the touching pushrod base (24-1, 26, 32-1) comprises a carriage (24-1) guided directly by the guide device (24) and a touching pushrod pickup (26) directly connected or connectable to the touching pushrod (12), wherein the carriage (24-1) and the touching pushrod pickup (26) are connected to one another by means of an elastically deformable body (33-1), and that the force measuring device (32) is constituted as a strain gauge for measuring the deformation of the elastic body (32-1).

3. The device (10) according to claim 1 or 2, wherein the control device (ST) is designed, according to an operating mode, to provide a force loading or deformation of the sample (P) that is constant over the entire measurement.

4. The device (10) according to any one of the preceding claims, wherein the control device (ST) is designed, according to an operating mode, to provide a force loading or deformation of the sample (P) that is variable over the measurement.

5. The device (10) according to any one of the preceding claims, wherein a mechanical stop is disposed between the carriage (24-1) and the touching pushrod pickup (26), in such a way that a relative movement between the carriage (24-1) and the touching pushrod pickup (26) and therefore the deformation of elastic body (32-1) is limited.

6. The device (10) according to any one of the preceding claims, wherein the drive device (30) comprises a stepping motor (30-2), in particular a piezo stepping motor, for the stepped adjustability of the touching pushrod base (24-1, 26, 32-1) relative to the stationary base (22).

7. The device (10) according to any one of the preceding claims, wherein the position pickup (34) is constituted by an optical position measuring system (34-1, 34-2, 34-3).

8. The device (10) according to claim 7, wherein the optical position measuring system (34-1, 34-2, 34-3) comprises a linear scale (34-2) and a sensor (34-3) with connected linear encoder electronics, wherein the linear scale (34-2) is disposed on the touching pushrod (12) or a part (34-1) connected thereto in a shear-resistant manner in the longitudinal direction, and the sensor (34-3) is arranged stationary, or vice versa.

9. The device (10) according to any one of the preceding claims, wherein the device (10) also comprises a sample chamber (3) temperature-regulatable in a controlled manner and having a sample holder (1) provided therein for supporting the sample (P) and the control device (ST) is also designed to control a predetermined time-dependent temperature regulation of the sample chamber (3) during the measurement.

10. A method for measuring a length change of a sample (P) force-loaded in a predetermined manner in a direction, referred to hereinafter as a longitudinal direction (L), wherein the predetermined force is exerted on the sample (P) by means of a touching pushrod (12) extending in longitudinal direction (L) and the movement of the touching pushrod (12) resulting from the length change of the sample (P) in longitudinal direction (L) is measured, and wherein driving of a touching pushrod base (24-1, 26, 32-1), to which the touching pushrod (12) is fixed, takes place in longitudinal direction (L) relative to a stationary base (22), wherein this driving takes place depending on the force exerted by the touching pushrod (12) on the sample (P) and measured by means of a force measuring device (32) in accordance with the predetermined force loading,
**characterised in that** the touching pushrod base (24-1, 26, 32-1) comprises a carriage (24-1) guided directly by the guide device (24) and a touching pushrod pickup (26) directly connected to the touching pushrod (12), wherein the carriage (24-1) and the touching pushrod pickup (26) are connected to one another by means of an elastically deformable body (33-1),
and that the force measurement is brought about by the fact that the deformation of the elastic body (32-1) is measured.

11. A method for measuring a deformation force on a sample (P) deformed in a predetermined manner in a direction, referred to hereinafter as longitudinal direction (L), wherein the predetermined deformation of the sample (P) is brought about by means of a touching pushrod extending in longitudinal direction (L) and the deformation force accompanying the deformation of the sample (P) in longitudinal direction (L) is measured, and wherein driving of a touching pushrod base (24-1, 26, 32-1), to which the touching pushrod (12) is fixed, takes place in longitudinal direction (L) relative to a stationary base (22), wherein this driving takes place depending on the movement brought about by the touching pushrod (12) on the sample (P) and detected by means of the position pickup (34) in accordance the predetermined deformation,
**characterised in that** the touching pushrod base (24-1, 26, 32-1) comprises a carriage (24-1) guided directly by the guide device (24) and a touching pushrod pickup (26) directly connected to the touching pushrod (12), wherein the carriage (24-1) and the touching pushrod pickup (26) are connected to one another by means of an elastically deformable body (33-1),
and that the measurement of the deformation force is brought about by the fact that the deformation of the elastic body (32-1) is measured.

## Revendications

1. Dispositif (10) destiné à mesurer une variation de longueur d'une éprouvette (P) contrainte par force de manière prédéfinie dans une direction, ci-dessous appelée direction longitudinale (L), avec un poinçon détecteur (12) s'étendant en direction longitudinale (L), qui pendant l'opération de mesure, exerce avec une extrémité (14) de poinçon détecteur la force prédéfinie sur l'éprouvette (P), et avec un système de mesure (20), au moyen duquel, pendant l'opération de mesure, le déplacement du poinçon détecteur (12) résultant de la variation de longueur de l'éprouvette (P) dans la direction longitudinale (L) est mesuré, le système de mesure (20) comprenant :
- une base (22) stationnaires,
- une base (24-1, 26, 32-1) de poinçon détecteur logée sur la base (22) stationnaire en étant mobile par l'intermédiaire d'un système de guidage (24) dans la direction longitudinale (L) par rapport à la base (22) stationnaire, sur laquelle le poinçon détecteur (12) peut être fixé ou est fixé,
- un système d'entraînement (30) actionnable, destiné à entraîner la base (24-1, 26, 32-1) du poinçon détecteur dans la direction longitudinale (L), par rapport à la base (22) stationnaire,
- un capteur de force (32) destiné à détecter la force exercée sur l'éprouvette (P) par le poinçon détecteur (12),
- un capteur de course (34) destiné à mesurer le déplacement du poinçon détecteur (12) dans la direction longitudinale (L) par rapport à la base (22) et
- un système de commande (ST) qui est conçu pour actionner le système d'entraînement (30) en fonction de la force détectée au moyen du capteur de force (32) selon la contrainte par charge prédéfinie,
**caractérisé en ce que** la base (24-1, 26, 32-1) du poinçon détecteur comporte un chariot (24-1) directement guidé par le système de guidage (24) et un logement (26) de poinçon détecteur pouvant être relié ou qui est relié directement avec le poinçon détecteur (12), le chariot (24-1) et le logement (26) de poinçon détecteur étant reliés l'un à l'autre par l'intermédiaire d'un corps (33-1) élastiquement déformable et **en ce que** le capteur de force (32) est conçu comme un capteur de déformation, destiné à mesurer la déformation du corps (32-1) élastique.

2. Dispositif (10) destiné à mesurer une force de déformation d'une éprouvette (P) déformée de manière prédéfinie dans une direction, ci-dessous appelée direction longitudinale (L), avec un poinçon détecteur (12) s'étendant en direction longitudinale (L), qui pendant l'opération de mesure provoque avec une extrémité (14) de poinçon détecteur la déformation prédéfinie de l'éprouvette (P) et avec un dispositif de mesure (20), au moyen duquel, lors de l'opération de mesure, la force de déformation accompagnant la déformation de l'éprouvette (P) en direction longitudinale (L) est mesurée, le système de mesure (20) comprenant :
- une base (22) stationnaire,
- une base (24-1, 26, 32-1) de poinçon détecteur logée sur la base (22) stationnaire en étant mobile par l'intermédiaire d'un système de guidage (24) dans la direction longitudinale (L) par rapport à la base (22) stationnaire, sur laquelle le poinçon détecteur (12) peut être fixé ou est fixé,
- un système d'entraînement (30) actionnable, destiné à entraîner la base (24-1, 26, 32-1) du poinçon détecteur dans la direction longitudinale (L), par rapport à la base (22) stationnaire,
- un capteur de force (32), destiné à détecter la force exercée sur l'éprouvette (P) par le poinçon détecteur (12),
- un capteur de course (34), destiné à mesurer le déplacement du poinçon détecteur (12) dans la direction longitudinale (L) par rapport à la base (22) et
- un système de commande (ST) qui est conçu pour actionner le système d'entraînement (30) en fonction du déplacement détecté au moyen du capteur déplacement (34) selon la déformation prédéfinie,
**caractérisé en ce que** la base (24-1, 26, 32-1) du poinçon détecteur comporte un chariot (24-1) directement guidé par le système de guidage (24) et un logement (26) de poinçon détecteur pouvant être relié ou qui est relié directement avec le poinçon détecteur (12), le chariot (24-1) et le logement (26) de poinçon détecteur étant reliés l'un à l'autre par l'intermédiaire d'un corps (33-1) élastiquement déformable et **en ce que** le capteur de force (32) est conçu comme un capteur de déformation, destiné à mesurer la déformation du corps (32-1) élastique.

3. Dispositif (10) selon la revendication 1 ou la revendication 2, le système de commande (ST) étant conçu pour prévoir une contrainte par force ou déformation constante de l'éprouvette (P) sur l'ensemble de l'opération de mesure, selon un mode de fonctionnement.

4. Dispositif (10) selon l'une quelconque des revendications précédentes, le système de commande (ST) étant conçu pour prévoir une contrainte par force ou déformation variable de l'éprouvette (P) sur l'ensemble de l'opération de mesure, selon un mode de fonctionnement.

5. Dispositif (10) selon l'une quelconque des revendications précédentes, entre le chariot (24-1) et le logement (26) de poinçon détecteur étant conçue une butée mécanique, de telle sorte qu'un déplacement relatif entre le chariot (24-1) et le logement (26) de poinçon détecteur et ainsi la déformation du corps (32-1) élastique soit limité(e).

6. Dispositif (10) selon l'une quelconque des revendications précédentes, le système d'entraînement (30) comportant un moteur pas à pas (30-2), notamment un moteur piézoélectrique pas à pas, pour la possibilité de réglage pas à pas de la base (24-1, 26, 32-1) du poinçon détecteur par rapport à la base (22) stationnaire.

7. Dispositif (10) selon l'une quelconque des revendications précédentes, le capteur de course (34) étant formé pas un système optique de mesure du déplacement (34-1, 34-2, 34-3).

8. Dispositif (10) selon la revendication 7, le système optique de mesure du déplacement (34-1, 34-2, 34-3) comportant une règle linéaire (34-2) et un capteur (34-3) avec une électronique de codage linéaire raccordée, la règle linéaire (34-2) étant placée de manière stationnaire sur le poinçon détecteur (12) ou sur un pièce (34-1) reliée avec ce dernier en direction longitudinale de manière résistant au cisaillement et le capteur (34-3) étant placé de manière stationnaire, ou inversement.

9. Dispositif (10) selon l'une quelconque des revendications précédentes, le dispositif (10) comportant par ailleurs un espace pour l'éprouvette (3) susceptible d'être actionné et tempéré, avec un porte-éprouvette (1) prévu en son intérieur pour le logement de l'éprouvette (P) et le système de commande (ST) étant conçu par ailleurs pour actionner pendant l'opération de mesure une mise en température prédéfinie en fonction du temps, de l'espace pour l'éprouvette (3).

10. Procédé destiné à mesurer une variation de longueur d'une éprouvette (P) contrainte par force de manière prédéfinie dans une direction, ci-dessous appelée direction longitudinale (L), lors duquel la force prédéfinie est exercée sur l'éprouvette (P) au moyen d'un poinçon détecteur (12) s'étendant dans la direction longitudinale (L) et le déplacement du poinçon détecteur (12) dans la direction longitudinale (L) résultant de la variation de longueur de l'éprouvette (P) est mesurée et lors duquel un entraînement d'une base (24-1, 26, 32-1) de poinçon détecteur sur laquelle est fixé le poinçon détecteur (12) s'effectue en direction longitudinale (L) par rapport à une base (22) stationnaire, ledit entraînement s'effectuant en fonction de la force exercée par le poinçon détecteur (12) sur l'éprouvette (P) et mesurée au moyen du capteur de force (32) selon la contrainte par charge prédéfinie,
**caractérisé en ce que** la base (24-1, 26, 32-1) du poinçon détecteur comporte un chariot (24-1) qui est guidé directement par le système de guidage (24) et comporte un logement (26) de poinçon détecteur qui est directement relié avec le poinçon détecteur (12), le chariot (24-1) et le logement (26) de poinçon détecteur étant reliés l'un avec l'autre par l'intermédiaire d'un corps (33-1) élastiquement déformable,
et **en ce que** la détection de force est réalisée par mesure de la déformation du corps (32-1) élastique.

11. Procédé destiné à mesurer une force de déformation sur une éprouvette (P) déformée de manière prédéfinie dans une direction, appelée ci-dessous direction longitudinale (L), lors duquel la déformation prédéfinie de l'éprouvette (P) est provoquée au moyen d'un poinçon détecteur (12) s'étendant dans la direction longitudinale (L) et on mesure la force de déformation accompagnant la déformation de l'éprouvette (P) dans la direction longitudinale (L), et lors duquel il s'effectue un entraînement en direction longitudinale (L) par rapport à une base (22) stationnaire de la base (24-1, 26, 32-1) du poinçon détecteur sur laquelle le poinçon détecteur (12) est fixé, ledit entraînement s'effectuant en fonction du déplacement provoqué par le poinçon détecteur (12) sur l'éprouvette (P) et étant détecté au moyen du capteur de course (34) selon la déformation prédéfinie,
**caractérisé en ce que** la base (24-1, 26, 32-1) du poinçon détecteur comporte un chariot (24-1) qui est guidé directement par le système de guidage (24) et comporte un logement (26) de poinçon détecteur qui est directement relié avec le poinçon détecteur (12), le chariot (24-1) et le logement (26) de poinçon détecteur étant reliés l'un à l'autre par l'intermédiaire d'un corps (33-1) élastiquement déformable
et **en ce que** la mesure de la force de déformation est réalisée par mesure de la déformation du corps élastique (32-1).
